# EUROPÄISCHE PATENTSCHRIFT

(11) **EP 3 717 974 B1**
(45) Veröffentlichungstag und Bekanntmachung des Hinweises auf die Patenterteilung: **29.12.2021**
(21) Anmeldenummer: 18829179.3
(22) Anmeldetag: 26.11.2018
(51) Int. Cl.: G05B 9/02, G05B 19/042

(54) **VERFAHREN ZUM BETREIBEN EINES MASCHINENSTEUERUNGSSYSTEMS SOWIE ENTSPRECHENDES MASCHINENSTEUERUNGSSYSTEM**
METHOD FOR OPERATING A MACHINE CONTROL SYSTEM, AND CORRESPONDING MACHINE CONTROL SYSTEM
PROCÉDÉ DESTINÉ À FAIRE FONCTIONNER UN SYSTÈME DE COMMANDE DE MACHINE ET SYSTÈME DE COMMANDE DE MACHINE CORRESPONDANT

(30) Priorität: 27.11.2017 AT 509842017
(43) Veröffentlichungstag der Anmeldung: 07.10.2020
(73) Patentinhaber: KEBA AG, 4041 Linz (AT)
(72) Erfinder: KREUNDL, Robert, 4481 Asten (AT); LEHNER, Bernhard, 4242 Hirschbach (AT); METZBAUER, Christoph, 4400 Steyr (AT)
(74) Vertreter: Burger, Hannes
(86) Internationale Anmeldenummer: PCT/AT2018/060276
(87) Internationale Veröffentlichungsnummer: WO 2019/100095

(56) Entgegenhaltungen:
- EP-A1- 3 193 071
- DE-A1- 10 110 776
- DE-A1- 10 344 358
- Anonymous: "Projektierung und Einsatz des Mobile Panel 277F IWLAN V2", Applicationsbeschreibung, 1. Februar 2011 (2011-02-01), Seiten 128-142, XP55567812, Gefunden im Internet: URL:https://cache.industry.siemens.com/dl/ files/331/25702331/att_7180/v1/25702331_mo bilepanel277f_iwlan_v2_de.pdf [gefunden am 2019-03-12]
- Anonymous: "SIMATIC HMI: Fehlersicherer Betrieb des Mobile Panel 277F IWLAN - Funktionshandbuch", , 1. August 2008 (2008-08-01), Seiten 1-11, XP55567804, Gefunden im Internet: URL:https://cache.industry.siemens.com/dl/ files/853/31255853/att_67389/v1/hmi_mobile _panel_277f_w_function_manual_deDE_de-DE.p df [gefunden am 2019-03-12]
- Franz Aschl: "Safety über WLAN", www.computer-automation.de, 1. Oktober 2016 (2016-10-01), Seiten 1-4, XP55567815, Gefunden im Internet: URL:https://www.sigmatek-automation.com/fi leadmin/user_upload/downloads/C_A-10-2016- safety-ueber-wlan.pdf [gefunden am 2019-03-12]

## Beschreibung

Die Erfindung betrifft ein Verfahren zum Betreiben eines Maschinensteuerungssystems mit wenigstens einer Maschinensteuerung zur Ausführung von Maschinenoperationen, sowie ein Maschinensteuerungssystem zur Ausführung des angegebenen Verfahrens.

Aus dem Stand der Technik ist es bekannt, Maschinensteuerung auszubilden bei welchen eine Bedienperson in der Lage ist, mittels einem tragbaren Handbediengerät auf die steuerungstechnischen Abläufe Einfluss zu nehmen. Um ein selektive Zuordnung bzw. ein eindeutiges Pairing zu ermöglichen, wurden spezifische Anmeldeverfahren eines Handbediengerätes gegenüber einer Maschinensteuerung vorgeschlagen. Solche Anmelde- bzw. Zuordnungsverfahren werden beispielsweise in der EP1866712B1, der EP1554637B1 oder der WO2007025879A1 vorgeschlagen. Mit den entsprechenden Anmelde- bzw. Zuordnungsverfahren sollen bedienerseitige Missverständnisse bzw. Fehlzuordnungen hintan gehalten werden.

Zur Erhöhung der funktionalen Zuverlässigkeit in Zusammenhang mit Maschinensteuerungen ist es aus der DE10110776B4 oder der JP7195285A bekannt, diversitäre Kommunikationskanäle bzw. mehrfache Funkstrecken zwischen einem Handbediengerät und einer funktechnischen Gegenstelle bzw. Anschlussbox vorzusehen.

Eine automatische Positions- bzw. Zonenerkennung in Zusammenhang mit einem mobilen Handbediengerät und einer Maschinensteuerung ist aus der WO2006103838A1 oder der DE102016003051A1 bekannt. In Abhängigkeit der jeweiligen Position bzw. Entfernung des mobilen Handbediengerätes werden dabei Bereichswarnungen oder automatische Sicherheitsabschaltungen ausgelöst. Auch durch diese Maßnahmen kann ein nur teilweise zufriedenstellendes Sicherheitsniveau erreicht werden.

Das Dokument "Projektierung und Einsatz des Mobile Panel 277F IWLAN V2", Applikationsbeschreibung - SIEMENS Applikationen & Tools, Februar 2011, sowie das Dokument "SIMATIC HMI: Fehlersicherer Betrieb des Mobile Panel 277F IWLAN - Funktionshandbuch", SIEMENS, August 2008, offenbart ein Maschinensteuerungssystem und ein Verfahren zum Betreiben dieses Maschinensteuerungssystems entsprechend dem einleitenden Teil der unabhängigen Ansprüche.

Das Dokument "Safety über WLAN", www.computer-automation.de, Franz Aschl, Oktober 2016, beschreibt ein Maschinensteuerungssystem mit einem mobilen, drahtlos anbindbaren Handbediengerät, welches Handbediengerät ein in Abhängigkeit seiner Funktionsverfügbarkeit beleuchtbares Nothalt-Betätigungselement aufweist.

Bei den aus dem Stand der Technik bekannten Ausführungsformen ist das insgesamt erzielbare Maß an Systemsicherheit in Zusammenhang mit drahtlos an eine Maschinensteuerung anbindbaren Handbediengeräten nur bedingt zufriedenstellend.

Aufgabe der vorliegenden Erfindung ist es, die Nachteile des Standes der Technik zu überwinden und ein Verfahren sowie eine Vorrichtung zur Verfügung zu stellen, mittels derer ein möglichst hoher steuerungstechnischer Bedienkomfort und Funktionsumfang erzielbar ist, und dabei trotzdem ein hohes sicherheitstechnisches Maß gewährleisten zu können.

Diese Aufgabe wird durch ein Verfahren und eine Vorrichtung gemäß den Ansprüchen gelöst. Erfindungsgemäß ist ein Verfahren zum Betreiben eines Maschinensteuerungssystems mit wenigstens einer Maschinensteuerung zur Ausführung von Maschinenoperationen und mit wenigstens einem mobilen, von einer Bedienperson tragbaren Handbediengerät zur funktionalen Beeinflussung von wenigstens einer der Maschinensteuerungen vorgesehen. Das Handbediengerät weist wenigstens ein Bedienelement oder wenigstens eine Schaltfläche zur manuellen Beeinflussung von Maschinenoperationen durch eine Bedienperson auf. Das Handbediengerät umfasst auch ein erstes Nothalt-Betätigungselement zur bedarfsweisen Beendigung von potentiell gefahrbringenden Maschinenoperationen durch eine Bedienperson.

Zudem weist das Handbediengerät wenigstens eine funktechnische Datenschnittstelle auf, wobei die wenigstens eine funktechnische Datenschnittstelle zum Aufbauen bzw. Betreiben einer steuerungstechnischen Wirkverbindung bzw. zum Umsetzen einer steuerungstechnischen Wechselwirkung zwischen dem Handbediengerät und einer von einer Bedienperson ausgewählten, steuerungstechnisch anbindbaren bzw. angebundenen Maschinensteuerung eingerichtet ist.

Die jeweils vorliegenden, von einer Bedienperson manuell veränderbaren bzw. bedarfsweise aktivierbaren Betätigungszustände des ersten Nothalt-Betätigungselementes, insbesondere die wahlweise herstellbaren Betätigungszustände umfassend eine Nothalt-Anforderung oder einen Normalbetriebszustand, werden dabei über die wenigstens eine funktechnische Datenschnitt-stelle signaltechnisch übertragen und bedarfs- bzw. steuerungskonform in einen Nothalt-Sicherheitsschaltkreis der ausgewählten bzw. steuerungstechnisch angebundenen Maschinensteuerung eingekoppelt. Demnach ist ein erster Betriebszustand des Handbediengerätes vorgesehen, in welchem das erste Nothalt-Betätigungselement bzw. dessen Betätigungszustände in funktionaler Hinsicht in den Nothalt-Sicherheitsschalkreis der ausgewählten bzw. steuerungstechnisch angebundenen Maschinensteuerung einkoppelbar sind.

Das erfindungsgemäße Verfahren ist weiters durch folgende Verfahrensschritte gekennzeichnet:
- Vorsehen, insbesondere permanentes Bereitstellen, von wenigstens einer örtlich vordefinierten Abmeldestelle oder von wenigstens einem örtlich vordefinierten Abmeldebereich für das Handbediengerät und/oder für das erste Nothalt-Betätigungselement am Handbediengerät bzw. für das erste Nothalt-Betätigungselement in funktionaler Zuordnung zum Handbediengerät, wobei an der wenigstens einen Abmeldestelle oder in dem wenigstens einen Abmeldebereich wenigstens ein weiteres, permanent verfügbares Nothalt-Betätigungselement in Griffweite der Bedienperson bereitgestellt bzw. vorgesehen ist;
- eine automatisierte Ermittlung der jeweiligen Aufenthaltsposition der Bedienperson durch ein indoor-taugliches Positionsmesssystem mit hinreichender Genauigkeit der Orts- oder Positionsauflösung, durch eine automatisierte Überprüfung ob die jeweilige Aufenthaltsposition der Bedienperson außerhalb eines vordefinierten Gefahrenbereiches von ausführbaren oder laufenden Maschinenoperationen liegt, und durch eine automatisierte Freischaltung, Verfügbarkeit oder Umsetzbarkeit des Abmeldevorganges des Handbediengerätes oder des Nothalt-Betätigungselementes unter der Voraussetzung eines positiven Überprüfungsergebnisses hinsichtlich der Aufenthaltsposition der Bedienperson;
- Verbringen des Handbediengerätes zu einer der örtlich vordefinierten Abmeldestellen oder in einen der örtlich vordefinierten Abmeldebereiche für das Handbediengerät und/oder für das erste Nothalt-Betätigungselement, welche Abmeldestelle oder welcher Abmeldebereich innerhalb eines funktionsfähigen bzw. steuerungstechnisch durchgreifenden Wirkbereiches des ersten Nothalt-Betätigungselementes liegt, wobei in diesem Wirkbereich eine Beendigung einer potentiell gefahrbringenden Maschinenoperation durch die Bedienperson wahlweise durch Betätigung des ersten oder des wenigstens einen weiteren Nothalt-Betätigungselementes zur Verfügung steht;
- manuelle Einleitung oder Ausführung eines Abmeldevorganges des Handbediengerätes und/oder des ersten Nothalt-Betätigungselementes durch eine Bedienperson an der Abmeldestelle oder innerhalb des Abmeldebereiches, welcher Abmeldevorgang wenigstens eine vordefinierte manuelle Bedienhandlung umfasst;
- steuerungstechnisches Auskoppeln und funktionsunwirksam Schalten des ersten Nothalt-Betätigungselementes gegenüber dem Nothalt-Sicherheitsschaltkreis der zuletzt funktional zugeordneten Maschinensteuerung basierend auf dem von einer Bedienperson manuell eingeleiteten und ausgeführten Abmeldevorgang.

Das erfindungsgemäße Verfahren bietet den Vorteil, dass das mobile bzw. tragbare Handbediengerät völlig drahtlos an eine ausgewählte Maschinensteuerung angekoppelt werden kann, wodurch eine hohe Bewegungsfreiheit der Bedienperson erzielt werden kann und damit eine optimale Einseh- bzw. Kontrollierbarkeit von manuell gesteuerten, von zu programmierenden und auch von automatisch ablaufenden Maschinenoperationen erreicht werden kann. Aufgrund des Nicht-Vorhandenseins einer Kabelverbindung sind etwaige Stolper- bzw. Sturzgefahren für die Bedienperson minimiert und mögliche Einhak-, Einzieh- bzw. Verwickelungsrisiken in Zusammenhang mit einer Kabelverbindung und ausgeführten Maschinenoperationen ausgeschlossen. Darüber hinaus können unerwartete Gefahrensituationen mithilfe des ebenso drahtlos bzw. funktechnisch in die Maschinensteuerung eingebundenen, und daher gewissermaßen mobilen bzw. relativ frei positionierbaren, ersten Nothalt-Betätigungselementes rasch abgewendet werden bzw. allfällige Risikosituationen jederzeit vermieden bzw. hintan gehalten werden.

Neben dem hohen Bedienkomfort liegt ein besonderer Vorteil der erfindungsgemäßen Maßnahmen darin, dass eine hohes Maß an Personensicherheit in Bezug auf manuell, teilautomatisch oder vollautomatisch ausgeführte Maschinenoperationen erreicht wird. Unter dem Ausdruck Maschinenoperationen sind unter anderem Bewegungen von Maschinen, Werkzeugen oder Werkstücken, und auch potentiell gefahrbringende Prozessabläufe zu verstehen. Im Speziellen wird durch die erfindungsgemäßen Maßnahmen eine hochgradig bewusste Abmeldung des Handbediengerätes bzw. des Nothalt-Betätigungselementes an einer vordefinierten Abmeldestelle bzw. in einem vordefinierten Abmeldebereich mit einem in Griffweite verfügbaren, bedarfsweise ergreif- und aktivierbaren Nothalt-Betätigungselement gewährleistet. Insbesondere wird der Bedienperson durch den dezidierten, steuerungs- bzw. ablauftechnisch vordefinierten Abmeldevorgang besonders stark bewusst gemacht, dass ein ursprünglich verfügbares bzw. im Bedarfsfall aktivierbares Nothalt-Betätigungselement nach der Ausführung des angegebenen Abmeldevorgangs funktional bzw. steuerungstechnisch deaktiviert wird und fortan nicht mehr zur Verfügung steht. Missverständnisse bzw. überraschende Situationen auf Seiten der Bedienperson können dadurch hintan gehalten bzw. nahezu ausgeschlossen werden.

Zudem können durch die erfindungsgemäßen Maßnahmen ungewollte, automatische Einleitungen von Stopp- bzw. Nothalt-Zuständen bei einer laufenden Maschinenoperation verstärkt vermieden werden, nachdem das Bewusstsein zur Ausführung eines aktiven Abmeldevorganges bei Bedienpersonen gestärkt wird. Ohne Durchführung eines willentlichen Abmeldevorganges müsste in der Regel nämlich dann, wenn sich die Bedienperson - beispielsweise aufgrund von Unachtsamkeit - mit dem Handbediengerät bzw. dem Nothalt-Betätigungselement aus dem eingeschränkten Funktions- bzw. Wirkungsbereich der funktechnischen Datenschnittstelle entfernt, automatisch ein Nothalt bzw. ein Stoppen der laufenden Maschinenoperationen eingeleitet werden bzw. ein sicherer Zustand im Maschinenablauf bzw. im jeweils ausgeführten technischen Prozess hergestellt werden. Hierbei gilt es zu beachten, dass der Funktions- bzw. Wirkungsbereich der funktechnischen Datenschnittstelle und damit auch des ersten Nothalt-Betätigungselementes unter anderem aus technischen bzw. physikalischen Gründen naturgemäß eingeschränkt ist bzw. stets begrenzt sein wird. Unbemerkte bzw. unbewusste Verbindungsabbrüche könnten daher zu sicherheitskritischen Zuständen führen.

Die vorgenannten technischen Wirkungen und vorteilhaften Effekte werden durch eine
automatisierte Ermittlung der jeweiligen Aufenthaltsposition der Bedienperson durch ein indoor-taugliches Positionsmesssystem mit hinreichender Genauigkeit der Orts- oder Positionsauflösung erreicht werden, wobei die erzielbare Personensicherheit erfindungsgemäß durch eine automatisierte Überprüfung, ob die jeweilige Aufenthaltsposition der Bedienperson außerhalb eines vordefinierten Gefahrenbereiches von ausführbaren oder laufenden Maschinenoperationen liegt, und durch eine automatisierte Freischaltung, Verfügbarkeit oder Umsetzbarkeit des Abmeldevorganges des Handbediengerätes oder des Nothalt-Betätigungselementes unter der Voraussetzung eines positiven Überprüfungsergebnisses hinsichtlich der Aufenthaltsposition der Bedienperson erreicht wird.

Die von Unachtsamkeiten oder Missverständnissen ausgehenden Gefahren können noch weiter verringert bzw. minimiert werden durch eine automatisierte Signalisierung der Funktionswirksamkeit und/oder Funktionsunwirksamkeit des ersten Nothalt-Betätigungselementes mittels von einer Bedienperson visuell unterscheidbaren Farbgebungen oder Farbveränderungen. Insbesondere kann ein Anzeigen der Funktionswirksamkeit und/oder Funktionsunwirksamkeit des ersten Nothalt-Betätigungselementes durch eine steuerungstechnisch kontrollierte, wahlweise Aktivierung und Deaktivierung einer Hinterleuchtung oder Beleuchtung des ersten Nothalt-Betätigungselementes erfolgen. Alternativ oder in Kombination dazu ist ein Anzeigen der Funktionswirksamkeit und/oder Funktionsunwirksamkeit des ersten Nothalt-Betätigungselementes durch visuell unterscheidbare körperliche bzw. strukturelle Erscheinungsformen des ersten Nothalt-Betätigungselementes möglich. Insbesondere kann ein in seinem Verfügbarkeitszustand gegenüber dem Gehäuse des Handbediengerätes vorkragendes Nothalt-Betätigungselement vorhanden sein. Im nicht-verfügbaren bzw. abgemeldeten Zustand des ersten Nothalt-Betätigungselementes kann hingegen vorgesehen sein, dass es zumindest teilweise vertieft bzw. versenkt positioniert ist, oder durch eine Blende oder Klappe zumindest teilweise verdeckt bzw. umschlossen wird. In Zusammenhang mit einer gesteuerten Hinterleuchtung oder Beleuchtung des ersten Nothalt-Betätigungselementes ist es zweckmäßig, wenn zumindest ein Teilabschnitt des ersten Nothalt-Betätigungselementes leuchtet bzw. hinterleuchtet ist, insbesondere rotes Licht abstrahlt bzw. in roter Farbe erscheint. Demgegenüber kann im nicht-verfügbaren bzw. abgemeldeten Zustand des Nothalt-Betätigungselement dessen Hinterleuchtung bzw. Beleuchtung automatisiert abgeschaltet bzw. inaktiv sein und das Nothalt-Betätigungselement für eine Bedienperson ein graues bzw. milchig weißes Erscheinungsbild aufweisen. Die jeweiligen visuellen bzw. körperlichen Erscheinungszustände des ersten Nothalt-Betätigungselementes werden dabei bevorzugt automatisiert bzw. steuerungstechnisch herbeigeführt, beispielsweise durch eine Steuervorrichtung des Handbediengerätes bestimmt und eingeleitet bzw. vollautomatisch umgesetzt.

Eine weitere zweckmäßige Verfahrensmaßnahme ist definiert durch ein Verbringen des Handbediengerätes und/oder des ersten Nothalt-Betätigungselementes außerhalb des örtlich bzw. funktechnisch begrenzten Wirkbereiches des ersten Nothalt-Betätigungselementes nach einem erfolgreich ausgeführten Abmeldevorgang, ohne dass dadurch eine automatische Veränderung, insbesondere eine automatische Unterbrechung, im Nothalt-Sicherheitsschaltkreis der zuletzt zugeordneten Maschinensteuerung eingeleitet wird. Die Verfügbarkeit der automatisch bzw. teilautomatisch betriebenen technischen Anlage kann dadurch hoch gehalten werden. Insbesondere können dadurch unerwünschte bzw. ungewollte Stillstände aufgrund von Bedienfehlern der jeweiligen Bedienpersonen minimiert werden.

Eine andere praktikable Maßnahme ist gekennzeichnet durch ein Vorsehen bzw. Bereitstellen von wenigstens einer Basisstation, insbesondere in Art einer steuerungstechnischen Anschlussbox, welche Basisstation eine örtlich vordefinierte Abmeldestelle für das Handbediengerät und/oder für das erste Nothalt-Betätigungselement definiert, und welche Basisstation außerhalb eines Gefahrenbereiches von ausführbaren oder laufenden Maschinenoperationen positioniert ist. Dadurch kann für Bedienpersonen selbst dann ein hohes Sicherheitsniveau gewährleistet werden, wenn technische Maßnahmen nicht plangemäß funktionieren oder versagen sollten, oder bei laufenden Maschinenoperationen unvorhersehbare Situationen eintreten sollten. Darüber hinaus bietet die Ausbildung einer Basisstation bzw. einer sogenannten Anschlussbox den Vorteil, dass dadurch eine strukturelle Einrichtung geschaffen ist, welche von einer Bedienperson augenscheinlich als adäquater Abmeldebereich bzw. als mögliche Abmeldestelle erkannt werden kann.

Zweckmäßig kann es auch sein, wenn ein vorausgegangener bzw. initialer Anmeldevorgang des Handbediengerätes und/oder des ersten Nothalt-Betätigungselementes ausgeführt wird, durch welchen Anmeldevorgang eine von der Bedienperson ausgewählte Basisstation als funktechnische Gegenstelle für die funktechnische Datenschnittstelle am Handbediengerät definiert wird. Dadurch wird eine eindeutige Punkt-zu-Punkt-Verbindung bzw. eine klare funktionale Zuordnung und steuerungstechnische Wirkverbindung zwischen einem Handbediengerät und einer ausgewählten Maschinensteuerung aufgebaut. Gefahren, welche durch allfällige Missverständnisse und Fehlbedienungen entstehen würden, können so vor allem in Zusammenhang mit dem drahtlos bzw. funktechnisch kommunizierenden Handbediengerät effizient minimiert werden.

Eine erfindungsgemäße Maßnahme ist definiert durch ein Vorsehen bzw. Positionieren der wenigstens einen Abmeldestelle in wenigstens einem für eine Bedienperson ungehindert zugänglichen Aufenthaltsbereich, welcher wenigstens eine Aufenthaltsbereich außerhalb eines Gefahrenbereiches von ausführbaren oder laufenden Maschinenoperationen liegt, wobei die jeweiligen Aufenthaltspositionen der Bedienperson durch jeweils vorherrschende Signalstärken oder Signalübertragungsdauern von Funksignalen zwischen dem Handbediengerät und einer funktechnischen Gegenstelle oder umgekehrt automatisiert ermittelt werden, oder wobei die jeweiligen Aufenthaltspositionen der Bedienperson durch ein indoor-taugliches Positionsmesssystem mit hinreichender Genauigkeit der Orts- oder Positionsauflösung automatisiert ermittelt werden. Dadurch kann automatisiert überprüft werden, wo sich die Bedienperson jeweils befindet und kann so in vorteilhafter Art und Weise ein Abmeldevorgang nur dann zugelassen werden, wenn sich die Bedienperson in einem sicheren Abschnitt bzw. in einem grundsätzlich gefahrlosen Bereich befindet.

Entsprechend einer vorteilhaften Weiterbildung kann vorgesehen sein, dass die wenigstens eine manuelle Bedienhandlung zur Einleitung oder Umsetzung eines Abmeldevorganges des Handbediengerätes und/oder des Nothalt-Betätigungselementes eine manuelle Verbringung des Handbediengerätes in den örtlich begrenzten Empfangsbereich einer lokalen bzw. ortsfesten RFID- oder NFC-Lesevorrichtung umfasst. Alternativ oder in Kombination dazu kann eine manuelle Verbringung in den örtlich begrenzten Erfassungsbereich, insbesondere in den Sende-, Ansprech- bzw. Registrierungsbereich, einer lokalen bzw. ortsfesten RFID- oder NFC-Sendevorrichtung vorgesehen sein. Eine solche RFID- oder NFC-Sendevorrichtung kann durch einen ortsfest positionierten, kommunikationskompatiblen RFID-/NFC-Tag gebildet sein. Dadurch ist eine klare Bedienhandlung definiert, welche von einer Bedienperson bewusst auszuführen ist, um eine funktionale Abmeldung des Handbediengerätes bzw. eine Deaktivierung der Verfügbarkeit des Nothalt-Betätigungselementes bewirken zu können. Zudem sind die angegebenen Maßnahmen relativ manipulationsresistent und auch fehlersicher implementierbar.

Entsprechend deiner zweckmäßigen Ausführungsform kann vorgesehen sein, dass die wenigstens eine manuelle Bedienhandlung zur Einleitung oder Umsetzung eines Abmeldevorganges des Handbediengerätes und/oder des Nothalt-Betätigungselementes eine manuelle Verbringung des Handbediengerätes in den örtlich begrenzten Erfassungsbereich einer lokalen bzw. ortsfesten optoelektronischen Lesevorrichtung, insbesondere eines Scanners oder ein Kamera, oder in den örtlich begrenzten Wirkungs- oder Ansprechbereich einer lokalen bzw. ortsfesten, maschinenlesbaren Kennung, insbesondere eines Barcodes oder eines QR-Codes, umfasst. Auch durch diese Maßnahmen sind die vorgenannten Effekte in vorteilhafter Art und Weise erzielbar. Zudem sind die entsprechenden Maßnahmen relativ einfach und kostengünstig implementierbar.

Alternativ oder in Kombination zu den vorstehend genannten Maßnahmen zur Einleitung bzw. Ausführung eines Abmeldevorganges kann auch vorgesehen sein, dass die wenigstens eine manuelle Bedienhandlung zur Einleitung oder Umsetzung eines Abmeldevorganges des Handbediengerätes oder des Nothalt-Betätigungselementes eine aktive Betätigung eines diskreten Schaltelementes am Handbediengerät oder eine aktive Betätigung einer Eingabe- oder Quittierungs-Schaltfläche an einem berührungssensitiven Display, insbesondere an einem Touch-Screen, des Handbediengerätes umfasst. Durch dieses alternative oder gegebenenfalls zweite aktive Benutzerhandlung kann die Bewusstseinsbildung gegenüber der Bedienperson weiter gesteigert werden. Insbesondere kann dadurch ein zweistufiges Abmeldeverfahren geschaffen werden, durch welches Irrtümer bzw. Fehlbedienungen nahezu ausgeschlossen werden können.

Wenn der Abmeldevorgang erfolgreich ausgeführt bzw. funktional umgesetzt worden ist, ist es gemäß einer praktikablen Ausführungsform möglich, das Handbediengerät in einen zweiten Betriebszustand zu versetzen. Dabei ist es weiters zweckmäßig das erste Nothalt-Betätigungselement für eine Bedienperson als inaktiv zu signalisieren bzw. die Nicht-Verfügbarkeit des ersten Nothalt-Betätigungselementes anzuzeigen. Ferner ist eine steuerungstechnische Blockierung einer Abgabe oder Ausführung von potentiell sicherheitskritischen Steuerbefehlen vorzunehmen , sodass in diesem zweiten Betriebszustand potentiell sicherheitskritische Veränderungen von Maschinenoperationen für eine Bedienperson nicht verfügbar oder nicht ausführbar sind. Durch eine Übertragung von prozess- oder maschinenrelevanten Daten über die zumindest eine funktechnische Datenschnittstelle und durch eine zumindest teilweise Visualisierung von prozess- oder maschinenrelevanten Daten am Display des Handbediengerätes während der Einnahme des zweiten Betriebszustandes kann das Handbediengerät einen erweiterten Funktionsumfang erfüllen und so ein optimiertes Kosten-Nutzen-Verhältnis erlangen. Insbesondere kann dadurch das Handbediengerät im zweiten Betriebszustand in automatisierter bzw. steuerungstechnisch abgesicherter Art und Weise als reine Visualisierungsvorrichtung fungieren.

Gemäß einer funktional vorteilhaften Maßnahme kann vorgesehen sein, dass ein manuell eingeleiteter Aktiv- oder Betätigungszustand des ersten Nothalt-Betätigungselementes durch wenigstens einen elektrisch unterbrochenen bzw. offenen Öffner-Kontakt in dem wenigstens einkreisig, vorzugsweise zweikreisig, ausgeführten Nothalt-Sicherheitsschaltkreis der ausgewählten bzw. funktional angebundenen Maschinensteuerung repräsentiert wird. Demgegenüber ist es zweckmäßig, wenn ein Inaktiv- oder Bereitschaftszustand, insbesondere ein Inaktiv-Schaltzustand des ersten Nothalt-Betätigungselementes durch wenigstens einen elektrisch geschlossenen Öffner-Kontakt in dem wenigstens einkreisig, vorzugsweise zweikreisig, ausgeführten Nothalt-Sicherheitsschaltkreis der ausgewählten bzw. funktional angebundenen Maschinensteuerung repräsentiert wird. Damit kann ein relativ hohes sicherheitstechnisches Ausmaß erreicht werden.

Gemäß einer vorteilhaften Weiterbildung kann vorgesehen sein, dass ein am Handbediengerät ausgebildeter, oder ein mit dem Handbediengerät in Wechselwirkung stehender, von einer Bedienperson manuell betätigbarer Zustimmtaster zur individuellen Freischaltung von potentiell gefahrbringenden Steuerbefehlen automatisiert inaktiv geschaltet wird, wenn sich das Handbediengerät im zweiten Betriebszustand befindet. Auch dadurch kann das erzielbare Sicherheitsnievau weiter gesteigert werden. Insbesondere können Irrtümer bzw. Vergesslichkeiten von Bedienpersonen nicht zu potentiell gefahrbringenden Situationen führen.

Eine zweckmäßige Weiterbildung ist dadurch definiert, dass unter Einbeziehung einer eindeutigen, elektronisch verarbeitbaren Kennung ID1-ID3 des Handbediengerätes und/oder unter Einbeziehung einer eindeutigen, elektronischen Kennung ID1'-ID3' einer kompatiblen, funktechnischen Gegenstelle eine Punkt-zu-Punkt-Verbindung zwischen dem Handbediengerät und einer kompatiblen, funktechnischen Gegenstelle aufgebaut wird, und dass dabei automatisiert überprüft wird, dass ein Handbediengerät mit nur einer einzigen funktechnischen Gegenstelle wirkungsverbunden ist und/oder eine funktechnische Gegenstelle mit nur einem einzigen Handbediengerät wirkungsverbunden ist. Fehlerkritische Sondersituationen können so in zuverlässiger Art und Weise ausgeschlossen werden.

Entsprechend einer vorteilhaften Ausführungsform kann vorgesehen sein, dass ein funktechnisch zulässiger, örtlicher Wirkbereich oder ein vordefinierter örtlich begrenzter Verfügbarkeitsbereich der funktechnischen Datenschnittstelle vordefiniert ist, und dass bei einem Verlassen des funktechnischen Wirkbereiches der funktechnischen Datenschnittstelle des Handbediengerätes oder bei einem Verlassen bzw. Überschreiten des vordefinierten Verfügbarkeitsbereiches des Handbediengerätes automatisch ein sicherer Betriebszustand des Maschinensteuerungssystems eingeleitet wird, insbesondere der Nothalt-Sicherheitsschaltkreis der Maschinensteuerung elektrisch unterbrochen wird. Dadurch kann das Bewusstsein für einen ordnungsgemäßen Abmeldevorgang bei Bedienpersonen nochmals gesteigert werden.

Zweckmäßig kann es auch sein, wenn vor der automatischen oder semi-automatischen Einleitung eines sicheren Betriebszustandes eine Annäherung zum oder ein Erreichen des funktechnisch zulässigen, örtlichen Wirkbereiches oder des vordefinierten, örtlich begrenzten Verfügbarkeitsbereiches der funktechnischen Datenschnittstelle durch gesteuert variierende Farbgebungen oder Farbveränderungen signalisiert wird, insbesondere durch eine intermittierende Aktivierung und Deaktivierung einer Hinterleuchtung oder Beleuchtung des Nothalt-Betätigungselementes angezeigt wird. Alternativ oder in Kombination dazu können visuell unterscheidbare körperliche bzw. strukturelle Erscheinungsformen des Nothalt-Betätigungselementes vorgesehen sein, um eine Annäherung zum oder ein Erreichen des funktechnisch zulässigen, örtlichen Wirkbereiches oder des vordefinierten, örtlich begrenzten Verfügbarkeitsbereiches anzeigen zu können. Dies kann durch ein vom Gehäuse des Handbediengerätes entweder vorkragendes oder zumindest teilweise vertieft bzw. angeordnetes Nothalt-Betätigungselement bewerkstelligt werden. Die jeweiligen Stellzustände des Nothalt-Betätigungselementes werden dabei bevorzugt automatisiert eingeleitet bzw. eingenommen.

Die Aufgabe der Erfindung wird auch durch eine Maschinensteuerung gelöst, wie sie in den Ansprüchen angegeben ist. Die damit erzielbaren vorteilhaften Wirkungen und technischen Effekte sind den vorhergehenden und den nachfolgenden Beschreibungsteilen zu entnehmen.

Zum besseren Verständnis der Erfindung wird diese anhand der nachfolgenden Figuren näher erläutert.

Es zeigen jeweils in stark vereinfachter, schematischer Darstellung:
- Fig. 1: ein Schema eines beispielhaften Maschinensteuerungssystem umfassend Maschinen, insbesondere Industrieroboter, welche wahlweise manuell steuerbar sind und auch automatisiert gesteuert werden können;
- Fig. 2: ein tragbares Handbediengerät und eine funktechnisch daran ankoppelbare Anschlussbox bzw. funktechnische Gegenstelle;
- Fig. 3: mehre Handbediengeräte und über 1:1-Verbindungen funktechnisch jeweils angebundene Gegenstellen bzw. Anschlussboxen;
- Fig. 4: ein Nothalt-Betätigungselement mit automatisiert aktivier- und deaktivierbarer Beleuchtung oder Hinterleuchtung zur Signalisierung von dessen funktionaler Verfügbarkeit und Nicht-Verfügbarkeit.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

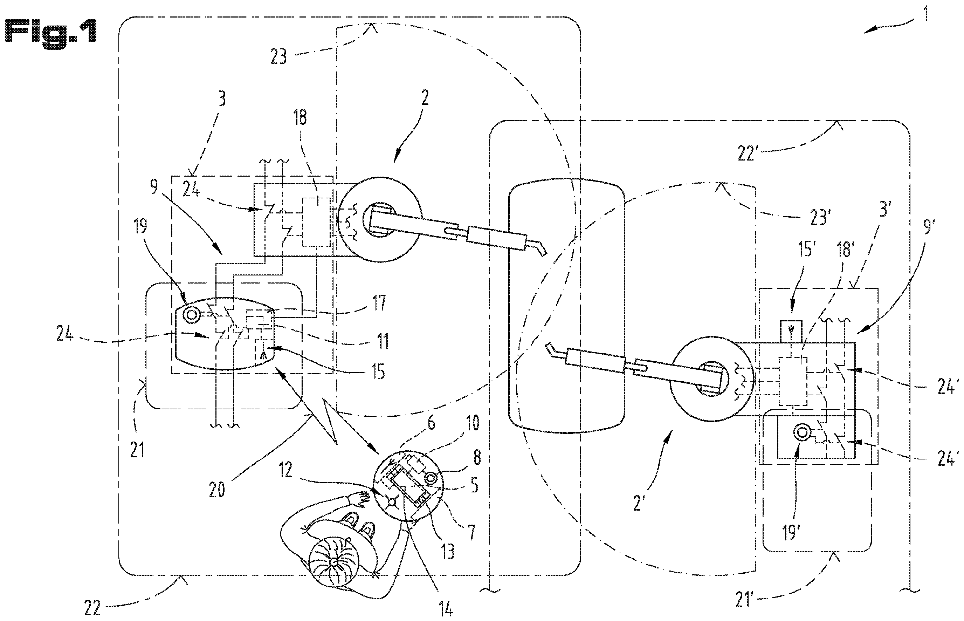

Fig. 1 zeigt ein Ausführungsbeispiel eines elektronischen Maschinensteuerungssystems 1 zur manuellen, teilautomatischen und vollautomatisierten Ausführung von Produktions- oder Bearbeitungsprozessen. Hierbei sind die entsprechenden Maschinen 2, 2' durch eine Gruppe von Industrierobotern gebildet. Die steuerungstechnisch kontrollierten Maschinen können aber auch durch andere Bearbeitungsmaschinen oder durch Werkzeugmaschinen gebildet sein.

Die entsprechenden Maschinen 2, 2' umfassen jeweils zumindest eine elektronische Maschinensteuerung 3, 3', über welchen die jeweiligen Aktoren bzw. Antriebe der zugeordneten Maschine 2, 2' angesteuert bzw. aktiviert werden können, und welche Maschinensteuerungen 3, 3' mit einer Mehrzahl von Sensoren oder Gebern zur Erfassung bzw. Überwachung der jeweiligen Betriebs- bzw. Maschinenzustände verbunden sind. Die an sich bekannten Maschinensteuerungen 3, 3' sind vorzugsweise programmgesteuert ausgeführt, insbesondere softwaretechnisch betreibbar.

In das Maschinensteuerungssystem 1 ist wenigstens ein mobiles, insbesondere ein von einer Bedienperson tragbares Handbediengerät 4 steuerungstechnisch eingebunden bzw. einbindbar. Das Handbediengerät 4 umfasst zumindest eine elektronische Steuervorrichtung 5, welche selektiv mit den lokalen Maschinensteuerungen 3, 3' in Wechselwirkung versetzbar ist bzw. hierzu kommunikationskompatibel ist. Zur daten- bzw. steuerungstechnischen Kommunikation mit wenigstens einer der lokalen Maschinensteuerungen 3, 3' ist dabei wenigstens eine funktechnische Datenschnittstelle 6 am Handbediengerät 4 ausgebildet bzw. mit dessen Steuervorrichtung 5 gekoppelt. Das Handbediengerät 4 ist dabei bevorzugt völlig kabellos ausgeführt, also ohne jeglicher Kabelverbindung betreibbar. Zur elektrischen Energieversorgung der elektrotechnischen Komponenten des Handbediengerätes 4 umfasst es wenigstens eine Batterie bzw. wenigstens einen aufladbaren Akkumulator 7.

Ein am Handbediengerät 4 ausgebildetes erstes Nothalt-Betätigungselement 8 ermöglicht einer Bedienperson eine Abwendung oder unmittelbare Beendigung von potentiell gefahrbringenden Situationen im Zuge von automatisiert oder teilautomatisiert ablaufenden Maschinenoperationen. Insbesondere kann durch eine Betätigung bzw. Aktivierung des ersten Nothalt-Betätigungselementes 8 ein sicherer Zustand eingeleitet werden bzw. können dadurch potentiell gefahrbringende Maschinenoperationen unmittelbar und umfassend beendet werden. Das erste Nothalt-Betätigungselement 8 wirkt dabei auf einen Nothalt-Sicherheitsschaltkreis 9 bzw. 9' der jeweils angesteuerten bzw. angebundenen Maschine 2 bzw. 2' ein. Allenfalls kann das erste Nothalt-Betätigungselement 8 auch auf das gesamte Maschinensteuerungssystem 1 einwirken.

Das erste Nothalt-Betätigungselement 8 ist via die wenigstens eine funktechnische Datenschnittstelle 6 am Handbediengerät 4 drahtlos in das Maschinensteuerungssystem 1 eingebunden bzw. funktechnisch mit der jeweils ausgewählten und aktiv angebundenen Maschinensteuerung 3, 3' wirkungsverbunden, insbesondere mit dem jeweiligen Nothalt-Sicherheitsschaltkreis 9, 9' funktional gekoppelt. Die wirkungstechnische Kopplung zwischen dem ersten Nothalt-Betätigungselement 8 und dem jeweiligen Nothalt-Sicherheitsschaltkreis 9, 9' erfolgt dabei unter Einhaltung hoher Verfügbarkeitsanforderungen und unter Berücksichtigung hoher Funktionszuverlässigkeit. Hierzu kann im Handbediengerät 4 ein elektronisches Sicherheitsmodul 10 implementiert sein, welches in Zusammenwirken mit einem elektronischen Sicherheits-Auswertemodul 11 auf Seiten der lokalen Maschinensteuerung 3, 3' für eine besonders funktionszuverlässige und hochverfügbare Auswertung und Übertragung der jeweiligen Betätigungszustände des ersten Nothalt-Betätigungselementes 8 am portablen, drahtlos angebundenen Handbediengerät 4 sorgt. Das erste Nothalt-Betätigungselement 8, welches somit mobil ausgeführt ist bzw. unmittelbar personenzugewiesen ist, ist somit im Bedarfsfall besonders rasch verfügbar bzw. unverzüglich aktivierbar.

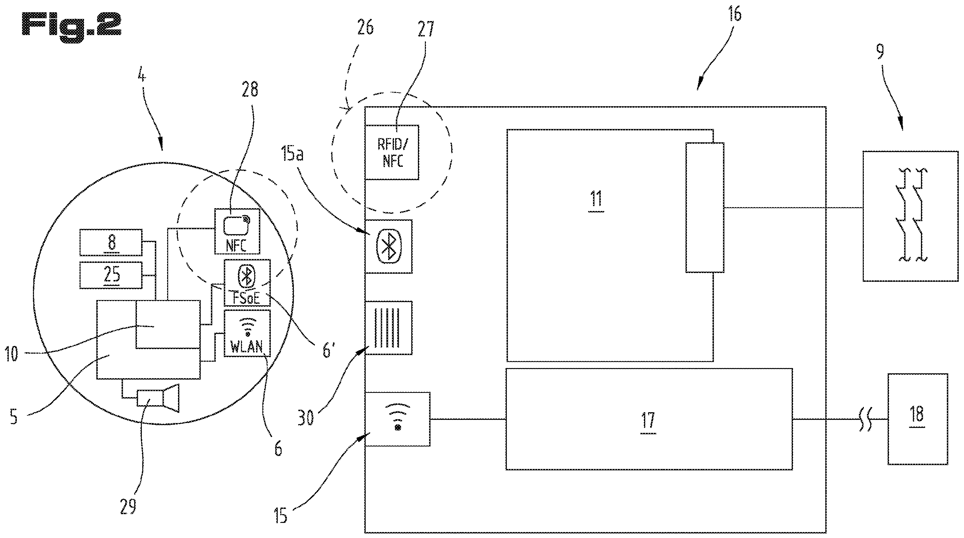

Abweichend von der in Fig. 1 dargestellten Ausführungsform bezüglich einer Anbringung des ersten Nothalt-Betätigungselementes 8 am Gehäuse des Handbediengerätes 4 ist es auch möglich, das erste Nothalt-Betätigungselement 8 als gesonderte Komponente auszubilden und über eine Kabelverbindung oder eine Funkverbindung mit dem Handbediengerät 4 bzw. mit dessen Steuervorrichtung 5 signaltechnisch zu koppeln. Gleiches kann für einen oder mehrere gegebenenfalls ausgebildete Zustimmtaster 25 - Fig. 2 - gelten. Derartige baulich separat ausgeführte Komponenten werden aufgrund ihrer handlichen und kompakten Ausgestaltung umgangssprachlich auch als "Zustimm- bzw. Nothalt-Knochen" bezeichnet.

Das Handbediengerät 4 umfasst weiters wenigstens ein Bedienelement 12, beispielsweise einen Joystick, ein Drehsteller-Betätigungselement oder dergleichen, und/oder eine Schaltfläche 13 zur manuellen Beeinflussung von Maschinenoperationen durch eine Bedienperson. Insbesondere sind mit dem wenigstens einen Bedienelement 12 bzw. mit der wenigstens einen Schaltfläche 13 von einer Bedienperson potentiell gefahrbringende Maschinenoperationen, beispielsweise Bewegungs-Steuerbefehle, Aktivierungen von Maschinenprozessen und dergleichen ausführ- bzw. einleitbar. Die wenigstens eine Schaltfläche 13 kann dabei als elektrisches Tastschalt- bzw. Schaltelement ausgeführt sein und/oder durch ein berührungssensitiven Abschnitt an einem berührungssensitiven Display 14 des Handbediengerätes 4 gebildet sein.

Um eine steuerungstechnische Wirkverbindung bzw. eine datentechnische Wechselwirkung zwischen dem kabellos ausgeführten Handbediengerät 4 und einer der Maschinensteuerungen 3, 3' aufbauen zu können, ist an der jeweiligen Maschinensteuerung 3, 3' wenigstens eine kommunikationskompatible, funktechnische Gegenstelle 15, 15' vorgesehen. Beispielsgemäß ist die funktechnische Gegenstelle 15 als baulich eigenständige Anschlussbox 16 mit integrierter Steuerungselektronik 17 ausgeführt, welche Steuerungselektronik 17 mit dem primären Steuerungskern 18 der Maschine 2 bzw. der Maschinensteuerung 3 wirkungs- bzw. leitungsverbunden ist. Die Ausbildung einer baulich eigenständigen Anschlussbox 16 bietet den Vorteil, dass dadurch bestehende Maschinensysteme nachgerüstet werden können bzw. eine optionale Erweiterung auf ein drahtloses Kommunikationssystem zur Verfügung steht.

Die Anschlussbox 16 umfasst vorzugsweise wenigstens ein weiteres Nothalt-Betätigungselement 19 mit welchem potentiell gefahrbringende Maschinenoperationen ebenso umgehend gestoppt werden können bzw. mit welchem für die Bedienperson und auch für sonstige Personen im Umfeld des Maschinensteuerungssystems 1 ein sicherer Zustand eingeleitet bzw. hergestellt werden kann. Hierzu ist das zumindest eine weitere Nothalt-Betätigungselement 19 funktional bzw. signaltechnisch in den Nothalt-Sicherheitsschaltkreis 9 eingebunden, vorzugsweise fest mit dem Nothalt-Sicherheitsschaltkreis 9 verdrahtet. Das vorhergehend beschriebene, in besonders funktionssicherer Technik umgesetzte Sicherheits-Auswertemodul 11 kann in der Anschlussbox 11 implementiert sein, insbesondere als funktionale Komponente der internen Steuerungselektronik 17 ausgeführt sein.

Wie anhand der Maschinensteuerung 3' gezeigt wurde, ist es auch möglich, die funktechnische Gegenstelle 15' als integrale bzw. unmittelbar zugeordnete Komponente des Steuerungskerns 18' auszuführen. Ebenso ist es möglich, dass das zumindest eine weitere Nothalt-Betätigungselement 19' im Umfeld der Maschine 2' direkt in den Nothalt-Sicherheitsschaltkreis 9' der Maschinensteuerung 3' eingebunden ist, insbesondere unmittelbar mit dem Nothalt-Sicherheitsschaltkreis 9' verdrahtet ist. Analoges kann für das Nothalt-Betätigungselement 19 an der Anschlussbox 16 und den Nothalt-Sicherheitsschaltkreis 9 der Maschinensteuerung 3 vorgesehen sein.

Die jeweils vorliegenden, von einer Bedienperson manuell auswähl- bzw. herbeiführbaren, insbesondere bedarfsweise aktivierbaren Betätigungszustände des ersten Nothalt-Betätigungselementes 8 am Handbediengerät 4 werden über die wenigstens eine funktechnische Datenschnittstelle 6 signaltechnisch übertragen und zustandsäquivalent in den Nothalt-Sicherheitsschaltkreis 9 der ausgewählten bzw. funktional angebundenen Maschinensteuerung 3 eingekoppelt. Demnach wird in einem ersten Betriebszustand des Handbediengerätes 4 das erste Nothalt-Betätigungselement 8 am Handbediengerät 4 in funktionaler Hinsicht in den Nothalt-Sicherheitsschalkreis 9 der ausgewählten bzw. funktional angebundenen Maschinensteuerung 3 eingekoppelt. Analoge Zustände gelten für jenen Fall, bei welchem das Handbediengerät 4 mit der Maschinensteuerung 3' wirkungsverbunden bzw. funktional gekoppelt ist. Insbesondere kann das Handbediengerät 4 wahlweise mit der Maschinensteuerung 3 oder mit der Maschinensteuerung 3' signaltechnisch gekoppelt werden. Dies hängt von den Wünschen bzw. steuerungstechnischen Erfordernissen der Bedienperson ab. Im dargestellten Ausführungsbeispiel gemäß Fig. 1 ist das Handbediengerät 4 mit der Maschinensteuerung 3 funktional gekoppelt, was anhand einer durch einen Doppelpfeil dargestellten, funktechnischen Wirkverbindung 20 ersichtlich ist. Demzufolge kann von der Bedienperson im Bedarfsfall ein Nothalt in Bezug auf die Maschinensteuerung 3 bzw. in Bezug auf die davon kontrollierten Maschinenoperationen eingeleitet werden. Hierfür betätigt die Bedienperson das erste Nothalt-Betätigungselement 8 am Handbediengerät 4 oder das wenigstens eine weitere Nothalt-Betätigungselement 19 im Umfeld bzw. Nahbereich der angesteuerten Maschine 2.

Wesentlich ist in diesem Zusammenhang, dass wenigstens eine örtlich vordefinierte Abmeldestelle 21, 21' oder wenigstens ein örtlich vordefinierter Abmeldebereich für das Handbediengerät 4 und/oder für das erste Nothalt-Betätigungselement 8 vorgesehen ist. An dieser Abmeldestelle 21, 21' oder in diesem Abmeldebereich ist das wenigstens eine weitere, permanent verfügbare Nothalt-Betätigungselement 19, 19' in Griffweite der Bedienperson bereitgestellt bzw. ausgebildet. Das wenigstens eine weitere Nothalt-Betätigungselement 19, 19' ist vorzugsweise permanent in den Nothalt-Sicherheitsschaltkreis 9, 9' eingebunden und kann einer regelmäßig Überprüfung oder einer funktionalen Überwachung unterliegen. Insbesondere ist das wenigstens eine weitere Nothalt-Betätigungselement 19, 19' an der wenigstens einen Abmeldestelle 21, 21' oder in dem wenigstens einen Abmeldebereich des Maschinensteuerungssystems 1 für eine Bedienperson gut zugänglich bzw. rasch zugreifbar.

Um das erste Nothalt-Betätigungselement 8 - welches unmittelbar am Handbediengerät 8 ausgebildet sein kann, oder alternativ als baulich eigenständige, tragbare Komponente ausgeführt sein kann und dabei in signaltechnischer Wechselwirkung mit dem Handbediengerät 4 steht - möglichst bewusst bzw. unmissverständlich aus dem jeweiligen Nothalt-Sicherheitsschaltkreis 9 bzw. 9' auskoppeln zu können, ist ein Verbringen des Handbediengerätes 4 zu einer der örtlich vordefinierten Abmeldestellen 21 bzw. 21' bzw. in einen der örtlich vordefinierten Abmeldebereiche für das Handbediengerät 4 und/oder für das erste Nothalt-Betätigungselement 8 erforderlich. Um beispielsweise in Zusammenhang mit dem exemplarischen Systemzustand gemäß Fig. 1 eine Abmeldung bzw. Deaktivierung des ersten Nothalt-Betätigungselementes 8 vornehmen zu können, muss die Bedienperson das Handbediengerät 4 im Nahbereich der Abmeldestelle 21 positionieren bzw. in den der Maschinensteuerung 3 zugewiesenen Abmeldebereich verbringen.

Die jeweilige Abmeldestelle 21 bzw. 21' oder der jeweilige Abmeldebereich für die Maschinensteuerung 3 bzw. 3' liegt innerhalb eines funktionsfähigen bzw. steuerungstechnisch nutzbaren Wirkbereiches 22, 22' des ersten Nothalt-Betätigungselementes 8. In diesem Wirkbereich 22, 22' steht einer Bedienperson eine Beendigung einer potentiell gefahrbringenden Maschinenoperation somit wahlweise durch Betätigung des ersten oder des wenigstens einen weiteren Nothalt-Betätigungselementes 8, 19, 19' zur Verfügung.

An der jeweiligen Abmeldestelle 21 bzw. 21' bzw. innerhalb des jeweiligen Abmeldebereiches kann dann von der Bedienperson ein Abmeldevorgang des Handbediengerätes 4 und/oder des ersten Nothalt-Betätigungselementes 8 eingeleitet werden. Dieser Abmeldevorgang umfasst wenigstens eine vordefinierte manuelle Bedienhandlung.

Basierend auf einem von einer Bedienperson manuell eingeleiteten und ausgeführten Abmeldevorgang erfolgt dann ein tatsächliches Auskoppeln und funktionsunwirksam Schalten des ersten Nothalt-Betätigungselementes 8 gegenüber dem Nothalt-Sicherheitsschaltkreis 9 bzw. 9' der Maschinensteuerung 3 bzw. 3'. Fortan ist damit das erste Nothalt-Betätigungselement 8 für die Bedienperson 8 nicht mehr verfügbar bzw. funktional deaktiviert. Durch die angegebenen Maßnahmen ist jedoch sichergestellt, dass die Abmeldung des ersten Nothalt-Betätigungselementes 8 nur bewusst erfolgen kann. Darüber hinaus ist durch die Abmeldung an einer vordefinierten Abmeldestelle 21, 21' mit einem in Griffweite der Bedienperson verfügbaren, bedarfsweise ergreif- und aktivierbaren, weiteren Nothalt-Betätigungselement 19, 19' die Sicherheit der Bedienperson während des Abmeldevorganges des Handbediengerätes 4 bzw. des Nothalt-Betätigungselementes 8 gewährleistet. Beim Auskoppeln bzw. beim steuerungstechnischen funktionsunwirksam Schalten des ersten Nothalt-Betätigungselementes 8 wird dieses gegenüber dem zuvor zugeordneten Nothalt-Sicherheitsschaltkreis 9 bzw. 9' gebrückt bzw. funktional herausgelöst, ohne dass dabei ein Nothalt-Zustand im Nothalt-Sicherheitsschaltkreis 9 bzw. 9' bzw. an der jeweiligen Maschinensteuerung 3 bzw. 3' eintritt, wenn das erste Nothalt-Betätigungselement 8 zum Zeitpunkt des Herauslösens aus dem jeweiligen Nothalt-Sicherheitsschaltkreis 9 bzw. 9' nicht betätigt war.

Nach erfolgreicher Ausführung eines Abmeldevorganges des Handbediengerätes 4 bzw. des ersten Nothalt-Betätigungselementes 8 ist ein Verbringen des Handbediengerätes 4 und/oder des ersten Nothalt-Betätigungselementes 8 außerhalb des örtlich bzw. funktechnisch begrenzten Wirkbereiches 22 bzw. 22' des ersten Nothalt-Betätigungselementes 8 möglich, ohne dass dadurch eine automatische Veränderung, insbesondere eine automatische Unterbrechung, im Nothalt-Sicherheitsschaltkreis 9 bzw. 9' der jeweiligen Maschinensteuerung 3 bzw. 3' eingeleitet wird.

Die wenigstens eine örtlich vordefinierte Abmeldestelle 21, 21' für das Handbediengerät 4 und/oder für das erste Nothalt-Betätigungselement 8 kann durch wenigstens eine Basisstation bzw. Anschlussbox 16 definiert sein, welche Basisstation bzw. Anschlussbox 16 außerhalb eines Gefahrenbereiches 23 bzw. 23' von ausführbaren oder laufenden Maschinenoperationen positioniert ist. Der Gefahrenbereich 23 bzw. 23' ist dabei jener Bereich um die jeweilige Maschine 2 bzw. 2', in welchem aufgrund von laufenden Maschinenoperationen potentielle Gefahren für Personen vorliegen bzw. entstehen können.

Dabei kann vorgesehen sein, dass ein solcher Abmeldevorgang des Handbediengerätes 4 und/oder des ersten Nothalt-Betätigungselementes 8 bei jener Basisstation bzw. Anschlussbox 16 zu erfolgen hat, welche von der Bedienperson zuvor bzw. in einem initial Anmeldevorgang als Basisstation bzw. als Anschlussbox 16, insbesondere als funktechnische Gegenstelle 15, 15' für die funktechnische Datenschnittstelle 6 am Handbediengerät 4 definiert worden ist.

Die wenigstens eine Abmeldestelle 21, 21' kann in wenigstens einem für eine Bedienperson gut zugänglichen Aufenthaltsbereich vorgesehen sein, welcher wenigstens eine Aufenthaltsbereich außerhalb eines Gefahrenbereiches 23 bzw. 23' von ausführbaren Maschinenoperationen bzw. um laufende Maschinenoperationen liegt. Die jeweiligen Aufenthaltspositionen der Bedienperson können durch jeweils vorherrschende Signalstärken oder Signalübertragungsdauern von Funksignalen zwischen dem Handbediengerät 4 und einer funktechnischen Gegenstelle 15 bzw. 15', oder umgekehrt, automatisiert ermittelt werden. Die jeweiligen Aufenthaltspositionen der Bedienperson können aber auch durch ein indoor-taugliches Positionsmesssystem mit hinreichender Genauigkeit der Orts- oder Positionsauflösung automatisiert ermittelt werden.

Insbesondere ist es Teil der Erfindung, eine automatisierte Ermittlung der jeweiligen Aufenthaltsposition der Bedienperson innerhalb des Maschinensteuerungssystems 1 durch ein indoor-taugliches Positionsmesssystem mit hinreichender Genauigkeit der Orts- oder Positionsauflösung vorzunehmen. Ferner wird erfindungsgemäß eine automatisierte Überprüfung, ob die jeweilige Aufenthaltsposition der Bedienperson außerhalb bzw. innerhalb eines vordefinierten Gefahrenbereiches 23 bzw. 23' von aktuell laufenden bzw. grundsätzlich ausführbaren Maschinenoperationen liegt, vorgenommen. Unter der Voraussetzung eines positiven Überprüfungsergebnisses hinsichtlich der Aufenthaltsposition der Bedienperson außerhalb des Gefahrenbereiches 23 bzw. 23' wird in der Folge eine automatisierte Freischaltung, Bereitstellung oder Umsetzung des Abmeldevorganges des Handbediengerätes 4 oder des Nothalt-Betätigungselementes 8 vorgenommen bzw. steuerungstechnisch zugelassen.

Wenn der Abmeldevorgang erfolgreich ausgeführt bzw. funktional umgesetzt worden ist, kann das Handbediengerätes 4 entweder automatisch oder manuell initiiert in einen zweiten Betriebszustand versetzt werden. In diesem zweiten Betriebszustand ist es besonders zweckmäßig, wenn das erste Nothalt-Betätigungselementes 8 als inaktiv gekennzeichnet wird bzw. die Nicht-Verfügbarkeit des ersten Nothalt-Betätigungselementes 8 angezeigt wird. Dies kann via das Display 14 am Handbediengerät 4 erfolgen, und/oder - wie nachfolgend erläutert wird - durch das äußere Erscheinungsbild, insbesondere durch eine aktivier- und deaktivierbare Hinterleuchtung bzw. Beleuchtung des ersten Nothalt-Betätigungselementes 8 kenntlich gemacht werden. Zudem ist es zweckmäßig, wenn im zweiten Betriebszustand eine Abgabe oder Ausführung von potentiell sicherheitskritischen Steuerbefehlen automatisiert blockiert ist, sodass in diesem zweiten Betriebszustand potentiell sicherheitskritische Veränderungen von Maschinenoperationen für eine Bedienperson nicht verfügbar oder nicht ausführbar sind. Zudem kann im zweiten Betriebszustand des Handbediengerätes 4 eine Übertragung von prozess- oder maschinenrelevanten Daten über die zumindest eine funktechnische Datenschnittstelle 15, 15' und eine zumindest teilweise Visualisierung von prozess- oder maschinenrelevanten Daten am Display 14 des Handbediengerätes 4 erfolgen.

Ein manuell eingeleiteter Aktiv- oder Betätigungszustand des ersten Nothalt-Betätigungselementes 8 kann dabei durch wenigstens einen elektrisch unterbrochenen bzw. offenen Öffner-Kontakt 24, 24' in dem wenigstens einkreisig, vorzugsweise zweikreisig, ausgeführten Nothalt-Sicherheitsschaltkreis 9 bzw. 9' der ausgewählten Maschinensteuerung 3 bzw. 3' repräsentiert sein. Demgegenüber kann ein Inaktiv- oder Bereitschaftszustand, insbesondere ein Inaktiv-Schaltzustand des ersten Nothalt-Betätigungselementes 8 dadurch repräsentiert sein, dass der wenigstens eine Öffner-Kontakt 24, 24' in dem wenigstens einkreisig, vorzugsweise zweikreisig, ausgeführten Nothalt-Sicherheitsschaltkreis 9 bzw. 9' der ausgewählten Maschinensteuerung 3 bzw. 3' elektrisch geschlossenen ist.

Wie am besten aus Fig. 2 ersichtlich ist, kann auch vorgesehen sein, dass im zweiten Betriebszustand des Handbediengerätes 4 ein am Handbediengerät 4 ausgebildeter, oder ein mit dem Handbediengerät 4 in Wechselwirkung stehender, von einer Bedienperson manuell betätigbarer Zustimmtaster 25 zur individuellen Freischaltung von potentiell gefahrbringenden Steuerbefehlen automatisiert inaktiv geschaltet ist bzw. wird.

Wie weiters am besten der Fig. 2 entnehmbar ist, kann die wenigstens eine manuelle Bedienhandlung zur Einleitung oder Umsetzung eines Abmeldevorganges des Handbediengerätes 4 und/oder des ersten Nothalt-Betätigungselementes 8, welches Nothalt-Betätigungselement 8 auf dem Handbediengerät 4 oder auf einer baulich eigenständigen, portablen Komponente ausgebildet sein kann, eine manuelle Verbringung des Handbediengerätes 4 oder des ersten Nothalt-Betätigungselementes 8 in den örtlich begrenzten Empfangsbereich 26 einer lokalen bzw. RFID- oder NFC-Lesevorrichtung 27 umfassen. Die RFID- oder NFC-Lesevorrichtung 27 kann dabei der Anschlussbox 16 bzw. funktechnischen Gegenstelle zugeordnet sein und das Handbediengerät 4 kann einen eindeutigen RFID- oder NFC-Tag 28 bzw. eine entsprechende RFID- oder NFC-Sendevorrichtung 28 umfassen. Es ist aber ebenso möglich, die RFID- oder NFC-Lesevorrichtung 27 dem Handbediengerät 4 zuzuordnen und einen kompatiblen, eindeutigen RFID- oder NFC-Tag 28 an der jeweiligen Anschlussbox 16 vorzusehen. Im Zuge der Einleitung oder Ausführung eines Abmeldevorganges werden die RFID- oder NFC-Lesevorrichtung 27 und der funktionskompatible RFID- oder NFC-Tag 28 in den örtlich begrenzten, gegenseitigen Erfassungsbereich, insbesondere in den jeweiligen Wirkungs- bzw. Ansprechbereich verbracht.

Alternativ oder in Kombination dazu ist es auch möglich, als manuelle Bedienhandlung zur Einleitung oder Umsetzung eines Abmeldevorganges des Handbediengerätes 4 und/oder des ersten Nothalt-Betätigungselementes 8 eine manuelle Verbringung des Handbediengerätes 4 in den örtlich begrenzten Erfassungsbereich einer optoelektronischen Lesevorrichtung 29, insbesondere eines Scanners oder einer Kamera, vorzunehmen und dabei eine maschinenlesbare Kennung 30, insbesondere einen Barcode oder einen QR-Code, an der Basisstation bzw. Anschlussbox 16 zu erfassen und auszuwerten, wie dies in Fig. 2 veranschaulicht wurde. Es ist aber auch eine hierzu inverse Zuordnung der optoelektronischen Lesevorrichtung 29 und der damit erfassbaren maschinenlesbaren Kennung 30 möglich. Durch den örtlich begrenzten Wirkungs- oder Ansprechbereich einer optoelektronischen Lesevorrichtung 29 in Verbindung mit einer maschinenlesbaren Kennung 30 kann ein zuverlässiger bzw. manipulationssicherer Abmeldevorgang eingeleitet bzw. umgesetzt werden.

Es kann aber auch vorgesehen sein, dass die manuelle Bedienhandlung zur Einleitung oder Umsetzung eines Abmeldevorganges des Handbediengerätes 4 oder des ersten Nothalt-Betätigungselementes 8 zusätzlich eine aktive Betätigung eines diskreten Schaltelementes am Handbediengerät 4 oder eine aktive Betätigung einer Eingabe- oder Quittierungs-Schaltfläche am berührungssensitiven Display 14 des Handbediengerätes 4 erfordert.

Aus sicherheitstechnischen Gründen kann vorgesehen sein, dass das Handbediengerät 4 zwei diversitäre funktechnische Datenschnittstellen 6, 6' aufweist. Die erste funktechnische Datenschnittstelle 6 kann beispielsweise nach einem WLAN-Standard ausgeführt sein, während die zweite funktechnische Datenschnittstelle 6' gemäß einem Bluetooth-Standard arbeiten kann. Es sind aber auch andere funktechnische Konstellationen bzw. Mehrfach-Funkkanäle möglich, um die funktechnische Verfügbarkeit bzw. Funktionssicherheit in Zusammenhang mit der Signal- bzw. Datenübertragung zu erhöhen.

Die Anschlussbox 16 kann in ihrer Funktion als funktechnische Gegenstelle für das Handbediengerät 4 eine WLAN-Gegenstelle 15 und eine Bluetooth-Gegenstelle 15a umfassen, wie dies aus Fig. 2 ersichtlich ist.

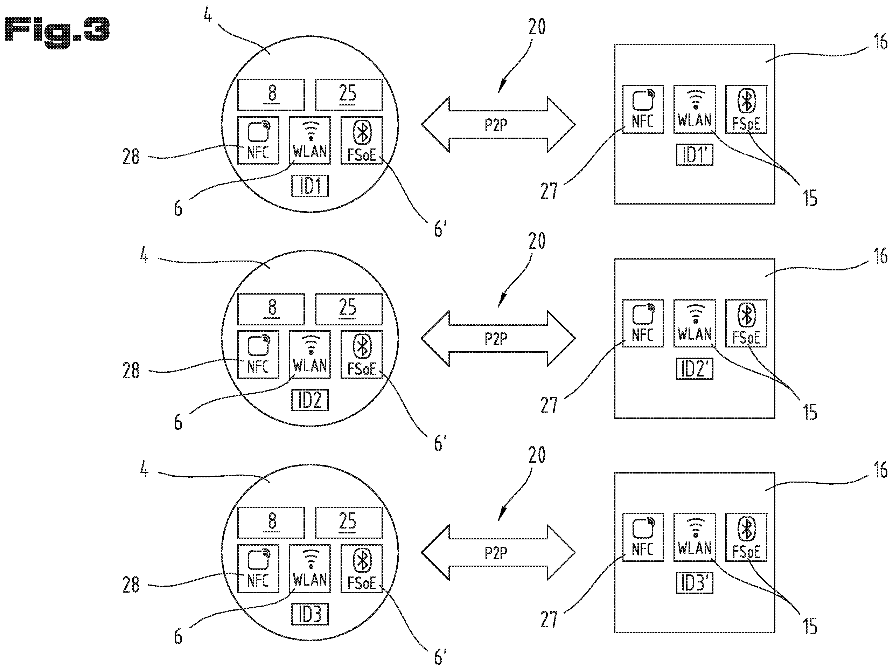

Wie am besten der Fig. 3 entnehmbar ist, können eindeutige, elektronisch verarbeitbare Kennungen ID1-ID3, ID1'-ID3' für Handbediengeräte 4 und kommunikationskompatible Anschlussboxen 16 bzw. Gegenstellen 15 vorgesehen sein. Unter Einbeziehung solcher eindeutigen, elektronischen Kennungen ID1-ID3, ID1'-ID3' für die Handbediengeräte 4 und die hierzu kompatiblen, funktechnischen Gegenstellen 15 können eindeutige Punkt-zu-Punkt-Verbindungen (P2P) zwischen einem Handbediengerät 4 und einer funktional zugeordneten, kompatiblen, funktechnischen Gegenstelle 15 aufgebaut werden. Hierdurch kann automatisiert überprüft und sichergestellt werden, dass ein bestimmtes Handbediengerät 4 mit nur einer einzigen, von der Bedienperson selektierten funktechnischen Gegenstelle 15 wirkungsverbunden ist und/oder eine bestimmte funktechnische Gegenstelle 15 mit nur einem einzigen Handbediengerät 4 wirkungsverbunden ist.

Zweckmäßig kann es auch sein, wenn ein örtlicher Wirkbereich 22, 22' oder ein vordefinierter örtlich begrenzter Verfügbarkeitsbereich der funktechnischen Datenschnittstelle 6, 6' vordefiniert ist und damit eine limitierte Datenübertragungsstrecke bzw. ein begrenzter Wirkbereich 22, 22' des Handbediengerätes 4 bzw. von dessen Nothalt-Betätigungselement 8 vorliegt. Bei einem Verlassen des funktechnischen Wirkbereiches 22, 22' der funktechnischen Datenschnittstelle 6, 6' des Handbediengerätes 4 oder bei einem Verlassen bzw. Überschreiten des vordefinierten Wirkungsbereiches 22, 22' des Handbediengerätes 4 kann automatisch ein sicherer Betriebszustand innerhalb des Maschinensteuerungssystems 1 eingeleitet werden, insbesondere der Nothalt-Sicherheitsschaltkreis 9 bzw. 9' der jeweiligen Maschinensteuerung 3 bzw. 3' elektrisch unterbrochen werden.

In diesem Zusammenhang kann auch vorgesehen sein, dass vor der automatischen oder semi-automatischen Einleitung eines sicheren Betriebszustandes eine Annäherung zum oder ein Erreichen des funktechnisch zulässigen, örtlichen Wirkbereiches 22, 22' - Fig. 1 - oder des vordefinierten, örtlich begrenzten Verfügbarkeitsbereiches der funktechnischen Datenschnittstelle 6, 6' durch gesteuert variierende Farbgebungen oder Farbveränderungen signalisiert wird: Insbesondere kann ein Verlassen des Verfügbarkeits- bzw. Wirkbereiches 22, 22' durch eine intermittierende Aktivierung und Deaktivierung einer Hinterleuchtung 31 oder Beleuchtung des ersten Nothalt-Betätigungselementes 8 angezeigt werden. Alternativ oder in Kombination dazu kann dies durch visuell unterscheidbare körperliche Erscheinungsformen des ersten Nothalt-Betätigungselementes 8 angezeigt bzw. der Bedienperson verdeutlicht werden.

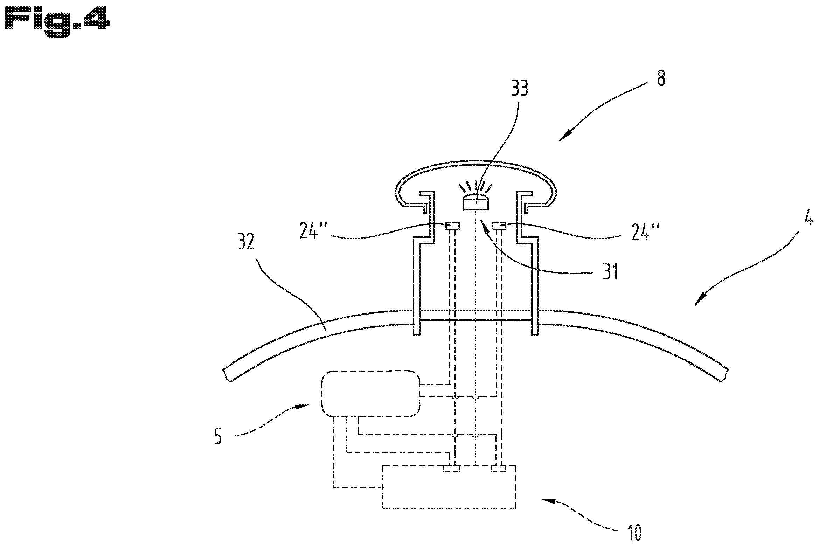

Wie am besten aus Fig. 4 ersichtlich ist, kann entsprechend einer vorteilhaften Maßnahme die automatisierte Signalisierung der Funktionswirksamkeit und/oder Funktionsunwirksamkeit des ersten Nothalt-Betätigungselementes 8 durch von einer Bedienperson visuell unterscheidbare Farbgebungen oder Farbveränderungen des ersten Nothalt-Betätigungselementes 8 umgesetzt sein. Insbesondere kann das Anzeigen der Funktionswirksamkeit und/oder Funktionsunwirksamkeit des ersten Nothalt-Betätigungselementes 8 am Handbediengerät 4 durch Aktivierung und Deaktivierung einer Hinterleuchtung 31 oder Beleuchtung des ersten Nothalt-Betätigungselementes 8 erfolgen. Alternativ oder in Kombination dazu kann das Anzeigen der Funktionswirksamkeit und/oder Funktionsunwirksamkeit des ersten Nothalt-Betätigungselementes 8 durch visuell unterscheidbare körperliche bzw. strukturelle Erscheinungsformen des ersten Nothalt-Betätigungselementes 4 repräsentiert bzw. verdeutlicht werden. In diese Zusammenhang ist eine gegenüber einem Gehäuse 32 des Handbediengerätes 4 entweder vorkragende oder eine zumindest teilweise vertiefte bzw. versenkte oder abgedeckte, automatisch eingeleitete und ausgeführte Umpositionierung des Nothalt-Betätigungselementes 8 möglich. Hierfür ist dem ersten Nothalt-Betätigungselement 8 eine nicht näher dargestellter Stellantrieb, beispielsweise ein Elektromotor oder ein Elektromagnet, zugeordnet. Der Stellantrieb ist dabei von der Steuervorrichtung 5 des Handbediengerätes 4 und/oder vom elektronischen Sicherheitsmodul 10 ansteuerbar, insbesondere aktivier- bzw. deaktivierbar.

Bei jener Ausführungsform, bei welcher die Funktionsverfügbarkeit und/oder die Nicht-Verfügbarkeit des ersten Nothalt-Betätigungselementes 8 durch visuell unterscheidbare Farbgebungen des Nothalt-Betätigungselementes 8 kenntlich gemacht wird, kann dem ersten Nothalt-Betätigungselement 8 ein gesteuert aktivier- und deaktivierbare Hinterleuchtung 31 zugeordnet sein. Diese Hinterleuchtung 31 umfasst eine elektrisch betreibbare Lichtquelle 33, insbesondere ein LED zur Abstrahlung von rotem Licht. Im Verfügbarkeitszustand des ersten Nothalt-Betätigungselementes 8 ist die Lichtquelle 33 steuerungstechnisch aktiviert, insbesondere zur Abstrahlung von rotem Licht vorgesehen. Das Aussehen des ersten Nothalt-Betätigungselementes 8, welches zumindest abschnittsweise transparent oder durchscheinend ausgeführt ist, ist damit zumindest teilweise in rot gehalten bzw. rot beleuchtet. Nach einer erfolgreichen Abmeldung bzw. Auskopplung des ersten Nothalt-Betätigungselementes 8 aus der jeweiligen Maschinensteuerung 3, 3' bzw. aus dem jeweiligen Nothalt-Sicherheitsschaltkreis 9 bzw. 9' wird die Hinterleuchtung 31 bzw. die Lichtquelle 33 deaktiviert, woraufhin das erste Nothalt-Betätigungselement 8 eine anderes, für die Bedienperson visuell klar erkenn- und unterscheidbares Erscheinungsbild aufweist. Insbesondere können zumindest Teilabschnitte des ersten Nothalt-Betätigungselementes 8 beim Vorliegen einer Nicht-Verfügbarkeit des Nothalt-Betätigungselementes 8 transparent bzw. unbeleuchtet sein, insbesondere grau oder milchig weiß erscheinen.

Die steuerungstechnisch kontrollierte bzw. automatische Aktivierung und Deaktivierung der Hinterleuchtung 31 bzw. der Lichtquelle 33 innerhalb des ersten Nothalt-Betätigungselementes 8 erfolgt vorzugsweise durch das elektronische Sicherheitsmodul 10 und/oder durch die elektronische Steuervorrichtung 5 des Handbediengerätes 4.

Im Hinblick auf die Erzielung hoher Sicherheitsstandards kann es zweckmäßig sein, wenn auch das erste Nothalt-Betätigungselement 8 zweikreisig ausgeführt ist, insbesondere zwei parallel geschaltete bzw. simultan wirkende Öffner-Kontakte 24" umfasst, welche jeweils zur elektronischen Erfassung des betätigten und nicht-betätigten Zustandes des ersten Nothalt-Betätigungselementes 8 fungieren können.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Maschinensteuerungssystem | 28 | RFID/-NFC-Tag oder Sendevor-richtung |
| 2, 2' | Maschine, Industrieroboter | | |
| 3, 3' | Maschinensteuerung | 29 | optoelektronische Lesevorrichtung |
| 4 | Handbediengerät | 30 | maschinenlesbare Kennung |
| 5 | Steuervorrichtung des Handbedi-engerätes | 31 32 | Hinterleuchtung Gehäuse |
| 6, 6' | funktechnische Datenschnitt-stelle | 33 | Lichtquelle |
| 7 | Akkumulator | | |
| 8 | erstes Nothalt-Betätigungselement | | |
| 9, 9' | Nothalt-Sicherheitsschaltkreis | | |
| 10 | Sicherheitsmodul | | |
| 11 | Sicherheits-Auswertemodul | | |
| 12 | Bedienelement | | |
| 13 | Schaltfläche | | |
| 14 | Display | | |
| 15, 15', 15a | funktechnische Gegenstelle | | |
| 16 | Anschlussbox | | |
| 17 | Steuerungselektronik | | |
| 18, 18' | Steuerungskern | | |
| 19, 19' | weiteres Nothalt-Betätigungselement | | |
| 20 | funktechnische Wirkverbindung | | |
| 21, 21' | Abmeldestelle | | |
| 22, 22' | Wirkbereich | | |
| 23, 23' | Gefahrenbereich | | |
| 24, 24', 24" | Öffner-Kontakt | | |
| 25 | Zustimmtaster | | |
| 26 | Empfangsbereich | | |
| 27 | RFID-/NFC-Lesevorrichtung | | |

## Patentansprüche

1. Verfahren zum Betreiben eines Maschinensteuerungssystems (1) mit wenigstens einer Maschinensteuerung (3, 3') zur Ausführung von Maschinenoperationen und mit wenigstens einem mobilen, von einer Bedienperson tragbaren Handbediengerät (4) zur funktionalen Beeinflussung von wenigstens einer der Maschinensteuerungen (3, 3'),
welches Handbediengerät (4) wenigstens ein Bedienelement (12) oder wenigstens eine Schaltfläche (13) zur manuellen Beeinflussung von Maschinenoperationen durch eine Bedienperson aufweist, und
welches Handbediengerät (4) ein erstes Nothalt-Betätigungselement (8) zur Beendigung von potentiell gefahrbringenden Maschinenoperationen umfasst,
und welches Handbediengerät (4) wenigstens eine funktechnische Datenschnittstelle (6, 6') aufweist, wobei die wenigstens eine funktechnische Datenschnittstelle (6, 6') zum Aufbauen und Umsetzen einer steuerungstechnischen Wirkverbindung zwischen dem Handbediengerät (4) und einer von einer Bedienperson ausgewählten und steuerungstechnisch angebundenen Maschinensteuerung (3, 3') eingerichtet ist,
und wobei die jeweils vorliegenden, von einer Bedienperson manuell aktivier- und veränderbaren Betätigungszustände des ersten Nothalt-Betätigungselementes (8) über die wenigstens eine funktechnische Datenschnittstelle (6, 6') signaltechnisch übertragen und in einen Nothalt-Sicherheitsschaltkreis (9, 9') der ausgewählten oder aktiv angebundenen Maschinensteuerung (3, 3') eingekoppelt werden, sodass in einem ersten Betriebszustand des Handbediengerätes (4) das erste Nothalt-Betätigungselement (8) in funktionaler Hinsicht in den Nothalt-Sicherheitsschalkreis (9, 9') der ausgewählten oder aktiv angebundenen Maschinensteuerung (3, 3') einkoppelbar ist,
**gekennzeichnet, durch**
- Vorsehen oder Bereitstellen von wenigstens einer örtlich vordefinierten Abmeldestelle (21, 21') oder von wenigstens einem örtlich vordefinierten Abmeldebereich für das Handbediengerät (4) und/oder für das erste Nothalt-Betätigungselement (8), an welcher Abmeldestelle (21, 21') oder in welchem Abmeldebereich wenigstens ein weiteres, permanent verfügbares Nothalt-Betätigungselement (19, 19') in Griffweite der Bedienperson bereitgestellt ist;
- Verbringen des Handbediengerätes (4) zu einer der örtlich vordefinierten Abmeldestellen (21, 21') oder in einen der örtlich vordefinierten Abmeldebereiche für das Handbediengerät (4) und/oder für das erste Nothalt-Betätigungselement (8), welche Abmeldestelle (21, 21') oder welcher Abmeldebereich innerhalb eines funktionsfähigen oder steuerungstechnisch durchgreifenden Wirkbereiches (22, 22') des ersten Nothalt-Betätigungselementes (8) liegt, wobei in diesem Wirkbereich (22, 22') eine Beendigung einer potentiell gefahrbringenden Maschinenoperation durch die Bedienperson wahlweise durch Betätigung des ersten oder des wenigstens einen weiteren Nothalt-Betätigungselementes (19, 19') zur Verfügung steht;
- automatisierte Ermittlung der jeweiligen Aufenthaltsposition der Bedienperson durch ein indoor-taugliches Positionsmesssystem mit hinreichender Genauigkeit der Orts- oder Positionsauflösung, durch eine automatisierte Überprüfung ob die jeweilige Aufenthaltsposition der Bedienperson außerhalb eines vordefinierten Gefahrenbereiches (23, 23') von ausführbaren oder laufenden Maschinenoperationen liegt, und durch eine automatisierte Freischaltung, Verfügbarkeit oder Umsetzbarkeit eines Abmeldevorganges des Handbediengerätes (4) oder des Nothalt-Betätigungselementes (8) unter der Voraussetzung eines positiven Überprüfungsergebnisses hinsichtlich der Aufenthaltsposition der Bedienperson;
- manuelle Einleitung oder Ausführung des Abmeldevorganges des Handbediengerätes (4) und/oder des ersten Nothalt-Betätigungselementes (8) durch eine Bedienperson an der Abmeldestelle (21, 21') oder innerhalb des Abmeldebereiches, welcher Abmeldevorgang wenigstens eine vordefinierte manuelle Bedienhandlung umfasst;
- steuerungstechnisches Auskoppeln und funktionsunwirksam Schalten des ersten Nothalt-Betätigungselementes (8) gegenüber dem Nothalt-Sicherheitsschaltkreis (9, 9') der ausgewählten oder aktiv angebundenen Maschinensteuerung (3, 3') basierend auf dem von einer Bedienperson manuell eingeleiteten und ausgeführten Abmeldevorgang.

2. Verfahren nach Anspruch 1, **gekennzeichnet durch** automatisiertes Signalisieren der Funktionswirksamkeit und/oder Funktionsunwirksamkeit des ersten Nothalt-Betätigungselementes (8) durch von einer Bedienperson visuell unterscheidbare Farbgebungen oder Farbveränderungen, insbesondere Anzeigen der Funktionswirksamkeit und/oder Funktionsunwirksamkeit des ersten Nothalt-Betätigungselementes (8) durch automatisiert gesteuerte Aktivierung oder Deaktivierung einer Hinterleuchtung (31) oder Beleuchtung des ersten Nothalt-Betätigungselementes (8), und/oder durch Anzeigen der Funktionswirksamkeit und/oder Funktionsunwirksamkeit des ersten Nothalt-Betätigungselementes (8) durch visuell unterscheidbare körperliche oder strukturelle Erscheinungsformen des ersten Nothalt-Betätigungselementes (8).

3. Verfahren nach Anspruch 1 oder 2, **gekennzeichnet durch** ein Verbringen des Handbediengerätes (4) und/oder des ersten Nothalt-Betätigungselementes (8) außerhalb des örtlich begrenzten, steuerungstechnisch durchgreifenden Wirkbereiches (22, 22') des ersten Nothalt-Betätigungselementes (8) nach einem erfolgreich ausgeführten Abmeldevorgang, ohne dass dadurch eine automatische Veränderung, insbesondere eine automatische Unterbrechung, im Nothalt-Sicherheitsschaltkreis (9, 9') der zuletzt ausgewählten oder aktiv angebundenen Maschinensteuerung (3, 3') eingeleitet wird.

4. Verfahren nach einem der vorhergehenden Ansprüche, **gekennzeichnet durch** ein Vorsehen oder Bereitstellen von wenigstens einer Basisstation oder Anschlussbox (16), welche Basisstation oder Anschlussbox (16) wenigstens eine der örtlich vordefinierten Abmeldestellen (21, 21') für das Handbediengerät (4) und/oder für das erste Nothalt-Betätigungselement (8) definiert, und welche Basisstation oder Anschlussbox (16) außerhalb eines Gefahrenbereiches (23, 23') von ausführbaren oder laufenden Maschinenoperationen positioniert ist.

5. Verfahren nach Anspruch 4, **gekennzeichnet durch** einen initialen Anmeldevorgang des Handbediengerätes (4) und/oder des ersten Nothalt-Betätigungselementes (8), in welchem Anmeldevorgang eine von der Bedienperson ausgewählte Basisstation oder Anschlussbox (16) als funktechnische Gegenstelle (15, 15') für die zumindest eine funktechnische Datenschnittstelle (6, 6') am Handbediengerät (4) definiert wird.

6. Verfahren nach einem der vorhergehenden Ansprüche, **gekennzeichnet durch** Vorsehen der wenigstens einen Abmeldestelle (21, 21') in wenigstens einem für eine Bedienperson zugänglichen Aufenthaltsbereich, welcher wenigstens eine Aufenthaltsbereich außerhalb eines Gefahrenbereiches (23, 23') von ausführbaren oder laufenden Maschinenoperationen liegt, und wobei die jeweiligen Aufenthaltspositionen der Bedienperson durch jeweils vorherrschende Signalstärken oder Signalübertragungsdauern von Funksignalen zwischen dem Handbediengerät (4) und einer funktechnischen Gegenstelle (15, 15'), oder umgekehrt, automatisiert ermittelt werden.

7. Verfahren nach einem der vorhergehenden Ansprüche, **dadurch gekennzeichnet, dass** die wenigstens eine manuelle Bedienhandlung zur Einleitung oder Umsetzung eines Abmeldevorganges des Handbediengerätes (4) und/oder des ersten Nothalt-Betätigungselementes (8) eine manuelle Verbringung des Handbediengerätes (4) in den örtlich begrenzten Empfangsbereich (26) einer lokalen oder ortsfesten RFID- oder NFC-Lesevorrichtung (27) oder in den örtlich begrenzten Erfassungs- oder Registrierungsbereich einer lokalen oder ortsfesten RFID- oder NFC-Sendevorrichtung (28) umfasst.

8. Verfahren nach einem der vorhergehenden Ansprüche, **dadurch gekennzeichnet, dass** die wenigstens eine manuelle Bedienhandlung zur Einleitung oder Umsetzung eines Abmeldevorganges des Handbediengerätes (4) und/oder des ersten Nothalt-Betätigungselementes (8) eine manuelle Verbringung des Handbediengerätes (4) in den örtlich begrenzten Erfassungsbereich einer lokalen oder ortsfesten optoelektronischen Lesevorrichtung (29), insbesondere eines Scanners oder ein Kamera, oder in den örtlich begrenzten Wirkungs- oder Ansprechbereich einer lokalen oder ortsfesten, maschinenlesbaren Kennung (30), insbesondere eines Barcodes oder eines QR-Codes, umfasst.

9. Verfahren nach einem der vorhergehenden Ansprüche, **dadurch gekennzeichnet, dass** die wenigstens eine manuelle Bedienhandlung zur Einleitung oder Umsetzung eines Abmeldevorganges des Handbediengerätes (4) oder des ersten Nothalt-Betätigungselementes (8) eine aktive Betätigung eines diskreten Schaltelementes am Handbediengerät (4) oder eine aktive Betätigung einer Eingabe- oder Quittierungs-Schaltfläche an einem berührungssensitiven Display (14) des Handbediengerätes (4) umfasst.

10. Verfahren nach einem der vorhergehenden Ansprüche, **gekennzeichnet durch** ein Versetzen des Handbediengerätes (4) in einen zweiten Betriebszustand wenn der Abmeldevorgang erfolgreich ausgeführt oder funktional umgesetzt worden ist, durch ein Signalisieren des ersten Nothalt-Betätigungselementes (8) als inaktiv oder durch Anzeigen der Nicht-Verfügbarkeit des ersten Nothalt-Betätigungselementes (8), durch eine Blockierung einer Abgabe oder Ausführung von potentiell sicherheitskritischen Steuerbefehlen, sodass in diesem zweiten Betriebszustand potentiell sicherheitskritische Veränderungen von Maschinenoperationen für eine Bedienperson nicht verfügbar oder nicht ausführbar sind, durch eine Übertragung von prozess- oder maschinenrelevanten Daten über die zumindest eine funktechnische Datenschnittstelle (6, 6') und durch eine zumindest teilweise Visualisierung von prozess- oder maschinenrelevanten Daten an einem Display (14) des Handbediengerätes (4) während der Einnahme des zweiten Betriebszustandes.

11. Verfahren nach einem der vorhergehenden Ansprüche, **dadurch gekennzeichnet, dass** ein manuell eingeleiteter Aktiv- oder Betätigungszustand des ersten Nothalt-Betätigungselementes () durch wenigstens einen elektrisch unterbrochenen Öffner-Kontakt (24, 24') in dem wenigstens einkreisig, vorzugsweise zweikreisig, ausgeführten Nothalt-Sicherheitsschaltkreis (9, 9') der ausgewählten oder aktiv angebundenen Maschinensteuerung (3, 3') repräsentiert wird.

12. Verfahren nach einem der vorhergehenden Ansprüche, **dadurch gekennzeichnet, dass** ein Inaktiv- oder Bereitschaftszustand, insbesondere ein Inaktiv-Schaltzustand des ersten Nothalt-Betätigungselementes (8) durch wenigstens einen elektrisch geschlossenen Öffner-Kontakt (24, 24') in dem wenigstens einkreisig, vorzugsweise zweikreisig, ausgeführten Nothalt-Sicherheitsschaltkreis (9, 9') der ausgewählten oder aktiv angebundenen Maschinensteuerung (3, 3') repräsentiert wird.

13. Verfahren nach einem der Ansprüche 10 bis 12, **dadurch gekennzeichnet, dass** ein am Handbediengerät (4) ausgebildeter, oder ein mit dem Handbediengerät (4) in Wechselwirkung stehender, von einer Bedienperson manuell betätigbarer Zustimmtaster (25) zur individuellen Freischaltung von potentiell gefahrbringenden Steuerbefehlen automatisiert inaktiv geschaltet wird, wenn sich das Handbediengerät (4) im zweiten Betriebszustand befindet.

14. Verfahren nach einem der vorhergehenden Ansprüche, **dadurch gekennzeichnet, dass** unter Einbeziehung einer eindeutigen, elektronisch verarbeitbaren Kennung (ID1-ID3) des Handbediengerätes (4) und/oder unter Einbeziehung einer eindeutigen, elektronischen Kennung (ID1'-ID3') einer kompatiblen, funktechnischen Gegenstelle (15, 15') oder Anschlussbox (16) eine Punkt-zu-Punkt-Verbindung zwischen einem Handbediengerät (4) und einer kompatiblen, funktechnischen Gegenstelle (15, 15') oder Anschlussbox (16) aufgebaut wird, und dass dabei automatisiert überprüft wird, dass ein Handbediengerät (4) mit nur einer einzigen funktechnischen Gegenstelle (15, 15') oder mit nur einer einzigen Anschlussbox (16) wirkungsverbunden ist und/oder eine funktechnische Gegenstelle (15, 15') oder eine Anschlussbox (16) mit nur einem einzigen Handbediengerät (4) wirkungsverbunden ist.

15. Verfahren nach einem der vorhergehenden Ansprüche, **dadurch gekennzeichnet, dass** ein funktechnisch zulässiger, örtlicher Wirkbereich (22, 22') oder ein vordefinierter örtlich begrenzter Verfügbarkeitsbereich der funktechnischen Datenschnittstelle (6, 6') vordefiniert ist, und dass bei einem Verlassen des funktechnischen Wirkbereiches (22, 22') der funktechnischen Datenschnittstelle (6, 6') des Handbediengerätes (4) oder bei einem Verlassen und Überschreiten des vordefinierten Verfügbarkeitsbereiches des Handbediengerätes (4) automatisch ein sicherer Betriebszustand des Maschinensteuerungssystems (1) eingeleitet wird, insbesondere der Nothalt-Sicherheitsschaltkreis (9, 9') der ausgewählten oder aktiv angebundenen Maschinensteuerung (3, 3') elektrisch unterbrochen wird.

16. Verfahren nach Anspruch 15, **dadurch gekennzeichnet, dass** vor der automatischen oder semi-automatischen Einleitung eines sicheren Betriebszustandes eine Annäherung zum oder ein Erreichen des funktechnisch zulässigen, örtlichen Wirkbereiches (22, 22') oder des vordefinierten, örtlich begrenzten Verfügbarkeitsbereiches der funktechnischen Datenschnittstelle (6, 6') durch gesteuert variierende Farbgebungen oder Farbveränderungen signalisiert wird, insbesondere durch eine intermittierende Aktivierung und Deaktivierung einer Hinterleuchtung (31) oder Beleuchtung des ersten Nothalt-Betätigungselementes (8) angezeigt wird, und/oder durch visuell unterscheidbare strukturelle oder körperliche Erscheinungsformen des Nothalt-Betätigungselementes (8) angezeigt wird.

17. Maschinensteuerungssystem (1) mit wenigstens einer Maschinensteuerung (3, 3') zur Ausführung von Maschinenoperationen und mit wenigstens einem mobilen, von einer Bedienperson tragbaren Handbediengerät (4) zur funktionalen Beeinflussung von wenigstens einer der Maschinensteuerungen (3, 3'),
welches Handbediengerät () wenigstens ein Bedienelement (12) oder wenigstens eine Schaltfläche (13) zur manuellen Beeinflussung von Maschinenoperationen durch eine Bedienperson aufweist, und
welches Handbediengerät (4) ein erstes Nothalt-Betätigungselement (8) zur Beendigung von potentiell gefahrbringenden Maschinenoperationen umfasst,
und welches Handbediengerät (4) wenigstens eine funktechnische Datenschnittstelle (6, 6') aufweist, wobei die wenigstens eine funktechnische Datenschnittstelle (6, 6') zum Aufbauen und Umsetzen einer steuerungstechnischen Wirkverbindung zwischen dem Handbediengerät (4) und einer von einer Bedienperson ausgewählten und steuerungstechnisch angebundenen Maschinensteuerung (3, 3') eingerichtet ist,
und wobei die jeweils vorliegenden, von einer Bedienperson manuell aktivier- und veränderbaren Betätigungszustände des ersten Nothalt-Betätigungselementes (8) über die wenigstens eine funktechnische Datenschnittstelle (6, 6') signaltechnisch übertragbar und in einen Nothalt-Sicherheitsschaltkreis (9, 9') der ausgewählten oder aktiv angebundenen Maschinensteuerung (3 , 3') einkoppelbar sind, sodass in einem ersten Betriebszustand des Handbediengerätes (4) das erste Nothalt-Betätigungselement (8) in funktionaler Hinsicht in den Nothalt-Sicherheitsschalkreis (9, 9') der ausgewählten oder aktiv angebundenen Maschinensteuerung (3, 3') eingekoppelt ist,
**dadurch gekennzeichnet, dass**
wenigstens eine örtlich vordefinierte Abmeldestelle (21, 21') oder wenigstens ein örtlich vordefinierter Abmeldebereich für das Handbediengerät (4) und/oder für das erste Nothalt-Betätigungselement (8) eingerichtet ist, an welcher Abmeldestelle (21, 21') oder in welchem Abmeldebereich wenigstens ein weiteres, permanent verfügbares Nothalt-Betätigungselement (19, 19') in Griffweite der Bedienperson ausgebildet ist,
dass die wenigstens eine Abmeldestelle (21, 21') oder der wenigstens eine Abmeldebereich innerhalb eines funktionsfähigen oder steuerungstechnisch durchgreifenden Wirkbereiches (22, 22') des ersten Nothalt-Betätigungselementes (8) positioniert ist, und dass in diesem Wirkbereich (22, 22') eine Beendigung einer potentiell gefahrbringenden Maschinenoperation durch die Bedienperson wahlweise durch Betätigung des ersten oder des wenigstens einen weiteren Nothalt-Betätigungselementes (19, 19') zur Verfügung steht,
dass ein indoor-taugliches Positionsmesssystem mit hinreichender Genauigkeit der Orts- oder Positionsauflösung zur automatisierten Ermittlung der jeweiligen Aufenthaltsposition der Bedienperson vorhanden und entsprechend ausgebildet ist, und dass das Maschinensteuerungssystem (1) für die automatisierte Überprüfung ausgelegt ist, ob die jeweilige Aufenthaltsposition der Bedienperson außerhalb eines vordefinierten Gefahrenbereiches (23, 23') von ausführbaren oder laufenden Maschinenoperationen liegt, und dass im Maschinensteuerungssystem (1) eine automatisierte Freischaltung, Verfügbarkeit oder Umsetzbarkeit eines Abmeldevorganges des Handbediengerätes (4) oder des Nothalt-Betätigungselementes (8) unter der Voraussetzung eines positiven Überprüfungsergebnisses hinsichtlich der Aufenthaltsposition der Bedienperson gegeben ist, und
dass die wenigstens eine Abmeldestelle (21, 21') oder der wenigstens eine Abmeldebereich dazu eingerichtet ist, dass von einer Bedienperson der Abmeldevorgang des Handbediengerätes (4) und/oder des ersten Nothalt-Betätigungselementes (8) manuell einleitbar oder ausführbar ist, welcher Abmeldevorgang wenigstens eine manuelle Bedienhandlung umfasst, durch welche das erste Nothalt-Betätigungselement (8) aus dem Nothalt-Sicherheitsschaltkreis (9, 9') der ausgewählten oder aktiv angebundenen Maschinensteuerung (3, 3') auskoppelbar und hinsichtlich seiner Funktion funktionsunwirksam schaltbar ist.

18. Maschinensteuerungssystem nach Anspruch 17, **dadurch gekennzeichnet, dass** es dazu eingerichtet ist, ein Verfahren nach einem oder mehreren der Ansprüche 1 bis 16 auszuführen.

## Claims

1. A method for operating a machine control system (1) having at least one machine controller (3, 3') for executing machine operations and having at least one mobile hand-held terminal (4) portable by an operator for functionally influencing at least one of the machine controllers (3, 3'),
which hand-held terminal (4) has at least one operating element (12) or at least one button (13) for the manual influencing of machine operations by an operator, and which hand-held terminal (4) comprises a first emergency stop actuating element (8) for terminating potentially dangerous machine operations,
and which hand-held terminal (4) has at least one radio data interface (6, 6'), wherein the at least one radio data interface (6, 6') is configured to establish and realize a control-based operative connection between the hand-held terminal (4) and a machine controller (3, 3') selected by an operator and connected in a control-based manner, and wherein the actuation states of the first emergency stop actuating element (8) present in each case, which can be manually activated and changed by an operator are transmitted by signaling and coupled into an emergency stop safety circuit (9, 9') of the selected or actively connected machine controller (3, 3') via the at least one radio data interface (6, 6'), so that in a first operating state of the hand-held terminal (4), the first emergency stop actuating element (8) can be functionally coupled into the emergency stop safety circuit (9, 9') of the selected or actively connected machine controller (3, 3') **characterized by**
- providing or supplying at least one locally predefined check-out station (21, 21') or at least one locally predefined check-out region for the hand-held terminal (4) and/or for the first emergency stop actuating element (8), at which check-out station (21, 21') or in which check-out region at least one further, permanently available emergency stop actuating element (19, 19') is provided within reach of the operator;
- moving the hand-held terminal (4) to one of the locally predefined check-out stations (21, 21') or in one of the predefined check-out regions for the hand-held terminal (4) and/or for the first emergency stop actuating element (8), which check-out station (21, 21') or which check-out region is located inside an effective region (22, 22') of the first emergency stop actuating element (8) that is functional or taking effect in a control-based manner, wherein in this effective region (22, 22') a termination of a potentially dangerous machine operation by the operator by actuating either the first or the at least one further emergency stop actuating element (19, 19') is available;
- automated determination of the respective location of the operator by means of a position measuring system suitable for indoor use with sufficient accuracy of the location or position resolution, by automatically checking whether the respective location of the operator is outside of a predefined hazard area (23, 23') of executable or running machine operations, and by an automated activation, availability or implementability of a check-out process of the hand-held terminal (4) or the emergency stop actuating element (8) under the condition of a positive check result with respect to the location of the operator;
- manually initiating or execution of the check-out process of the hand-held terminal (4) and/or the first emergency stop actuating element (8) by an operator at the check-out station (21, 21') or inside the check-out region, which check-out process comprises at least a predefined manual operating action;
- control-based decoupling and switching the first emergency stop actuating element (8) to be functionally ineffective with respect to the emergency stop safety circuit (9, 9') of the selected or actively connected machine controller (3, 3') based on the check-out process manually initiated or executed by an operator.

2. The method according to claim 1, **characterized by** automated signaling of the functional effectiveness and/or functional ineffectiveness of the first emergency stop actuating element (8) by means of colorations or color changes visually distinguishable by an operator, in particular indications of the functional effectiveness and/or functional ineffectiveness of the first emergency stop actuating element (8) by means of automatically controlled activation or deactivation of a backlighting (31) or illumination of the first emergency stop actuating element (8), and/or by indicating the functional effectiveness and/or functional ineffectiveness of the first emergency stop actuating element (8) by means of visually distinguishable physical or structural appearances of the first emergency stop actuating element (8).

3. The method according to claim 1 or 2, **characterized by** a moving of the hand-held terminal (4) and/or the first emergency stop actuating element (8) outside the locally limited effective region (22, 22'), taking effect in a control-based manner, of the first emergency stop actuating element (8) after a successfully executed check-put process without this causing an automatic change, in particular an automatic interruption, in the emergency stop safety circuit (9, 9') of the most recently selected or actively connected machine controller (3, 3').

4. The method according to one of the preceding claims, **characterized by** a providing or supplying of at least one base station or terminal box (16), which base station or terminal box (16) defines at least one of the locally predefined check-out stations (21, 21') for the hand-held terminal (4) and/or for the first emergency stop actuating element (8), and which base station or terminal box (16) is positioned outside of a hazard area (23, 23') of executable or running machine operations.

5. The method according to claim 4, **characterized by** an initial check-in process of the hand-held terminal (4) and/or of the first emergency stop actuating element (8), in which check-in process, a base station or terminal box (16) selected by the operator is defined as a radio remote station (15, 15') for the at least one radio data interface (6, 6') on the hand-held terminal (4).

6. The method according to one of the preceding claims, **characterized by** providing the at least one check-out station (21, 21') in at least one residence region accessible to an operator, which at least one residence region is outside a hazard area (23, 23') of executable or running machine operations, and wherein the respective positions of residence of the operator are determined in an automated manner by respectively prevalent signal strengths or signal transmission durations of radio signals between the hand-held terminal (4) and a radio remote station (15, 15'), or vice versa.

7. The method according to one of the preceding claims, **characterized in that** the at least one manual operating action for initiating or realizing a check-out process of the hand-held terminal (4) and/or of the first emergency stop actuating element (8) comprises a manual movement of the hand-held terminal (4) into the locally limited receiving region (26) of a local or stationary RFID or NFC reading device (27) or into the locally limited detection or registration region of a local or stationary RFID or NFC transmission device (28).

8. The method according to one of the preceding claims, **characterized in that** the at least one manual operating action for initiating or realizing a check-out process of the hand-held terminal (4) and/or of the first emergency stop actuating element (8) comprises a manual movement of the hand-held terminal (4) into the locally limited detection region of a local or stationary optoelectronic reading device (29), in particular a scanner or a camera, or into the locally limited effective or response area of a local or stationary machine-readable identifier (30), in particular a barcode or a QR code.

9. The method according to one of the preceding claims, **characterized in that** the at least one manual operating action for initiating or realizing a check-out process of the hand-held terminal (4) or of the first emergency stop actuating element (8) comprises an active actuation of a discrete switching element on the hand-held terminal (4) or an active actuation of an input or acknowledgment button on a touch-sensitive display (14) of the hand-held terminal (4).

10. The method according to one of the preceding claims, **characterized in that** the hand-held terminal (4) is transferred into a second operating state after the check-out process has been carried out successfully or functionally, by signaling the first emergency stop actuating element (8) as inactive or by indicating the non-availability of the first emergency stop actuating element (8), by means of a blocking of an output or execution of potentially safety-critical control commands, so that, in this second operating state, potentially safety-critical changes of machine operations are not available to an operator or cannot be carried out, by means of transmitting process- or machine-relevant data via the at least one radio data interface (6, 6') and by an at least partial visualization of process- or machine-relevant data on a display (14) of the hand-held terminal (4) while assuming the second operating state.

11. The method according to one of the preceding claims, **characterized in that** a manually initiated active or actuation state of the first emergency stop actuating element (8) is represented by at least one electrically interrupted breaker (24, 24') in the emergency stop safety circuit (9, 9') of the selected or actively connected machine controller (3, 3'), which emergency stop safety circuit (9, 9') is formed at least as a single circuit, preferably as a dual circuit.

12. The method according to one of the preceding claims, **characterized in that** an inactive or standby state, in particular an inactive switching state, of the first emergency stop actuating element (8) is represented by at least one electrically closed breaker (24, 24') in the emergency stop safety circuit (9, 9') of the selected or actively connected machine controller (3, 3'), which emergency stop safety circuit (9, 9') is formed at least as a single circuit, preferably as a dual circuit.

13. The method according to one of claims 10 to 12, **characterized in that** an enabling switch (25) formed on the hand-held terminal (4) or interacting with the hand-held terminal (4), which enabling switch (25) can be manually actuated by an operator is automatically switched to inactive for individually activating potentially dangerous control commands if the hand-held terminal (4) is in the second operating state.

14. The method according to one of the preceding claims, **characterized in that**, incorporating a clear, electronically processible identifier (ID1-ID3) of the hand-held terminal (4) and/or incorporating a clear, electronic identifier (ID1'-ID3') of a compatible radio remote station (15, 15') or terminal box (16), a point-to-point connection between a hand-held terminal (4) and a compatible, radio remote station (15, 15') or terminal box (16) is established, and that thereby, it is automatically checked that a hand-held terminal (4) is operatively connected to only a single radio remote station (15, 15') or to only a single terminal box (16), and/or a radio remote station (15, 15') or a terminal box (16) is operatively connected to only a single hand-held terminal (4).

15. The method according to one of the preceding claims, **characterized in that** a radio-admissible, local effective region (22, 22') or a predefined locally limited availability region of the radio data interface (6, 6') is predefined, and that upon leaving the radio effective region (22, 22') of the radio data interface (6, 6') of the hand-held terminal (4) or upon leaving and crossing the predefined availability region of the hand-held terminal (4), a safe operating state of the machine control system (1) is automatically initiated, in particular the emergency stop safety circuit (9, 9') of the selected or actively connected machine controller (3, 3') is electrically interrupted.

16. The method according to claim 15, **characterized in that** before the automatic or semi-automatic initiation of a safe operating state, an approximation to or a reaching of the radio-admissible, local effective region (22, 22') or of the predefined, locally limited availability region of the radio data interface (6, 6') is signaled by colorations or color changes varying in a controlled manner, in particular is indicated by means of an intermittent activation and deactivation of a backlighting (31) or illumination of the first emergency stop actuating element (8), and/or is indicated by means of visually distinguishable structural or physical appearances of the emergency stop actuating element (8).

17. A machine control system (1) having at least one machine controller (3, 3') for executing machine operations and having at least one mobile hand-held terminal (4) portable by an operator for functionally influencing at least one of the machine controllers (3, 3'),
which hand-held terminal (4) has at least one operating element (12) or at least one button (13) for the manual influencing of machine operations by an operator, and which hand-held terminal (4) comprises a first emergency stop actuating element (8) for terminating potentially dangerous machine operations,
and which hand-held terminal (4) has at least one radio data interface (6, 6'), wherein the at least one radio data interface (6, 6') is configured to establish and realize a control-based operative connection between the hand-held terminal (4) and a machine controller (3, 3') selected by an operator and connected in a control-based manner, and wherein the actuation states of the first emergency stop actuating element (8) present in each case, which can be manually activated and changed by an operator can be transmitted by signaling and can be coupled into an emergency stop safety circuit (9, 9') of the selected or actively connected machine controller (3, 3') via the at least one radio data interface (6, 6'), so that in a first operating state of the hand-held terminal (4), the first emergency stop actuating element (8) is functionally coupled into the emergency stop safety circuit (9, 9') of the selected or actively connected machine controller (3, 3')
**characterized in that**
at least one locally predefined check-out station (21, 21') or at least one locally predefined check-out region for the hand-held terminal (4) and/or for the first emergency stop actuating element (8) is configured, at which check-out station (21, 21') or in which check-out region at least one further, permanently available emergency stop actuating element (19, 19') is formed within reach of the operator;
that the at least one check-out station (21, 21') or the at least one check-out region is positioned inside an effective region (22, 22') of the first emergency stop actuating element (8) that is functional or reaching through in a control-based manner, and that in this effective region (22, 22') a termination of a potentially dangerous machine operation by the operator by actuating either the first or the at least one further emergency stop actuating element (19, 19') is available,
that a position measuring system suitable for indoor use with sufficient accuracy of the location or position resolution is present and accordingly formed for the automated determination of the respective location of the operator, and that the machine control system (1) is designed for the automated checking of whether the respective location of the operator is outside of a predefined hazard area (23, 23') of executable or running machine operations, and that an automated activation, availability or implementability of a check-out process of the hand-held terminal (4) or the emergency stop actuating element (8) under the condition of a positive check result with respect to the location of the operator is provided, and
that the at least one check-out station (21, 21') or the at least one check-out region is configured such that the check-out process of the hand-held terminal (4) and/or of the first emergency stop actuating element (8) can be manually initiated or executed by an operator, which check-out process comprises at least a predefined manual operating action, by means of which the first emergency stop actuating element (8) can be decoupled from the emergency stop safety circuit (9, 9') of the selected or actively connected machine controller (3, 3') and can be switched to be functionally ineffective with respect to its function.

18. The machine control system according to claim 17, **characterized in that** it is configured to carry out a method according to one or multiple of claims 1 to 16.

## Revendications

1. Procédé de fonctionnement d'un système de commande de machine (1) avec au moins une commande de machine (3, 3') pour l'exécution d'opérations de machine et avec au moins un appareil de commande manuel mobile (4) pouvant être porté par un opérateur, pour le contrôle fonctionnel d'au moins une des commandes de machine (3, 3'),
cet appareil de commande manuel (4) comprenant au moins un élément de commande (12) ou au moins un bouton (13) pour le contrôle d'opérations de machine par un opérateur et
cet appareil de commande manuel (4) comprenant un premier élément d'actionnement d'arrêt d'urgence (8) pour terminer des opérations de machine potentiellement dangereuses,
et cet appareil de commande manuel (4) comprenant au moins une interface de données radio (6, 6'), dans lequel l'au moins une interface de données radio (6, 6') est conçue pour l'établissement et la mise en œuvre d'une liaison fonctionnelle de commande entre l'appareil de commande manuel (4) et une commande de machine (3, 3') sélectionnée par un opérateur et reliée du point de vue de la commande,
et dans lequel les états d'actionnement existants, pouvant être activés et modifiés manuellement par un opérateur, du premier élément d'actionnement d'arrêt d'urgence (8) sont transmis par l'intermédiaire de l'au moins une interface de données radio (6, 6') à l'aide d'un signal et sont entrés dans un circuit de commutation de sécurité d'arrêt d'urgence (9, 9') de la commande de machine (3, 3') sélectionnée ou reliée activement, de façon à ce que, dans un premier état de fonctionnement de l'appareil de commande manuel (4), le premier élément d'actionnement d'arrêt d'urgence (8) puisse être couplé, de manière fonctionnelle, dans le circuit de commutation de sécurité d'arrêt d'urgence (9, 9') de la commande de machine (3, 3') sélectionnée ou reliée activement,
**caractérisé par**
- la prévision ou la mise à disposition d'au moins un poste de déconnexion (21, 21') prédéfini localement ou d'au moins une zone de déconnexion prédéfinie localement pour l'appareil de commande manuel (4) et/ou pour le premier élément d'actionnement d'arrêt d'urgence (8), au moins un autre élément d'actionnement d'arrêt d'urgence (19, 19') disponible en permanence, à portée de main de l'opérateur, étant mis à disposition au niveau de ce poste de déconnexion (21, 21') ou dans cette zone de déconnexion ;
- déplacement de l'appareil de commande manuel (4) vers un des postes de déconnexion (21, 21') prédéfinis localement ou dans une des zones de déconnexion prédéfinies localement pour l'appareil de commande manuel (4) et/ou pour le premier élément d'actionnement d'arrêt d'urgence (8), ce poste de déconnexion (21, 21') ou cette zone de déconnexion se trouvant à l'intérieur d'une zone d'action (22, 22'), fonctionnelle ou importante d'un point de vue de la commande, du premier élément d'actionnement d'arrêt d'urgence (8), dans lequel, dans cette zone d'action (22, 22'), un arrêt d'une opération de machine potentiellement dangereuse par l'opérateur est possible grâce à l'actionnement du premier ou de l'au moins un autre élément d'actionnement d'arrêt d'urgence (19, 19') ;
- détermination automatisée de la position de l'opérateur grâce à un système de mesure de position approprié pour l'intérieur avec une précision suffisante de la résolution locale ou de position, par une vérification automatisée si la position respective de l'opérateur se trouve à l'extérieur d'une zone dangereuse (23, 23') prédéfinie d'opérations de machine pouvant être exécutées ou en cours, et par une libération, disponibilité, ou une applicabilité automatisée d'un processus de déconnexion de l'appareil de commande manuel (4) ou de l'élément d'actionnement d'arrêt d'urgence (8) est possible à la condition d'un résultat de vérification positif en ce qui concerne la position de l'opérateur ;
- l'initiation ou l'exécution manuelle du processus de déconnexion de l'appareil de commande manuel (4) et/ou du premier élément d'actionnement d'arrêt d'urgence (8) par un opérateur au niveau du poste de déconnexion (21, 21') ou à l'intérieur de la zone de déconnexion, ce processus de déconnexion comprenant au moins une action de commande manuelle prédéfinie ;
- découplage, du point de vue de la commande, et commutation de désactivation du fonctionnement du premier élément d'actionnement d'arrêt d'urgence (8) par rapport au circuit de commutation de sécurité d'arrêt d'urgence (9, 9') de la commande de machine (3, 3') sélectionnée ou reliée activement sur la base du processus de déconnexion initié et exécuté manuellement par un opérateur.

2. Procédé selon la revendication 1, **caractérisé par** une signalisation automatisée de l'efficacité du fonctionnement et/ou de l'inefficacité du fonctionnement du premier élément d'actionnement d'arrêt d'urgence (8) par des couleurs ou des variations de couleur pouvant être discernées visuellement par un opérateur, plus particulièrement affichage de l'efficacité du fonctionnement et/ou de l'inefficacité du fonctionnement du premier élément d'actionnement d'arrêt d'urgence (8) par une activation ou une désactivation contrôlée de manière automatisée d'un rétro-éclairage (31) ou d'un éclairage du premier élément d'actionnement d'arrêt d'urgence (8) et/ou par l'affichage de l'efficacité du fonctionnement et/ou de l'inefficacité du fonctionnement du premier élément d'actionnement d'arrêt d'urgence (8) par des aspects physiques ou structurels, pouvant être discernées visuellement, du premier élément d'actionnement d'arrêt d'urgence (8).

3. Procédé selon la revendication 1 ou 2, **caractérisé par** un déplacement de l'appareil de commande manuel (4) et/ou du premier élément d'actionnement d'arrêt d'urgence (8) hors de la zone d'action (22, 22'), délimitée localement, importante du point de vue de la commande, du premier élément d'actionnement d'arrêt d'urgence (8) après un processus de déconnexion exécuté avec succès, sans qu'une modification automatique, plus particulièrement une interruption automatique, ne soit initiée dans le circuit de commutation de sécurité d'arrêt d'urgence (9, 9') de la commande de machine (3, 3') sélectionnée en dernier ou reliée activement.

4. Procédé selon l'une des revendications précédentes, **caractérisé par** la prévision ou la mise à disposition d'au moins une station de base ou d'un boîtier de raccordement (16), cette station de base ou ce boîtier de raccordement (16) définissant au moins un des postes de déconnexion (21, 21') prédéfinis localement pour l'appareil de commande manuel (4) et/ou pour le premier élément d'actionnement d'arrêt d'urgence (8) et cette station de base ou ce boîtier de raccordement (16) étant positionné à l'extérieur d'une zone dangereuse (23, 23') d'opérations de machine exécutables ou en cours.

5. Procédé selon la revendication 4, **caractérisé par** un processus de connexion initial de l'appareil de commande manuel (4) et/ou du premier élément d'actionnement d'arrêt d'urgence (8), une station de base de base ou un boîtier de raccordement (16) sélectionné par l'opérateur étant défini, dans ce processus de connexion, comme un poste radio correspondant (15, 15') pour l'au moins une interface de données radio (6, 6') sur l'appareil de commande manuel (4).

6. Procédé selon l'une des revendications précédentes, **caractérisé par** la prévision de l'au moins un poste de déconnexion (21, 21') se trouve dans au moins une zone de séjour accessible à un opérateur, cette au moins une zone de séjour se trouvant à l'extérieur d'une zone dangereuse (23, 23') d'opérations de machine exécutables ou en cours, et dans lequel les positions respectives de l'opérateur sont déterminées de manière automatisée respectivement par des intensités de signaux ou des durées de transmission de signaux radio entre l'appareil de commande manuel (4) et un poste radio correspondant (15, 15') ou inversement.

7. Procédé selon l'une des revendications précédentes, **caractérisé en ce que** l'au moins une action de commande manuelle pour l'initiation ou la mise en œuvre d'un processus de déconnexion de l'appareil de commande manuel (4) et/ou du premier élément d'actionnement d'arrêt d'urgence (8) comprend un déplacement manuel de l'appareil de commande manuel (4) vers la zone de réception (26), limitée localement, d'un dispositif de lecture RFID ou NFC local ou stationnaire (27) ou vers la zone de détection ou d'enregistrement limitée localement d'un dispositif d'émission RFID ou NFC local ou stationnaire (28).

8. Procédé selon l'une des revendications précédentes, **caractérisé en ce que** l'au moins une action de commande manuelle pour l'initiation ou la mise en œuvre d'un processus de déconnexion de l'appareil de commande manuel (4) et/ou du premier élément d'actionnement d'arrêt d'urgence (8) comprend un déplacement manuel de l'appareil de commande manuel (4) vers la zone de détection limitée localement d'un dispositif de lecture opto-électronique local ou stationnaire (29), plus particulièrement d'un scanner ou d'une caméra, ou vers la zone d'action de réponse limitée localement d'un identifiant lisible par une machine, local ou stationnaire (30), plus particulièrement d'un code-barre ou d'un code QR.

9. Procédé selon l'une des revendications précédentes, **caractérisé en ce que** l'au moins une action de commande manuelle pour l'initiation ou la mise en œuvre d'un processus de déconnexion de l'appareil de commande manuel (4) et/ou du premier élément d'actionnement d'arrêt d'urgence (8) comprend un actionnement actif d'un élément de commutation discret sur l'appareil de commande manuel (4) ou un actionnement actif d'une touche d'entrée ou d'acquittement sur un écran tactile (14) de l'appareil de commande manuel (4).

10. Procédé selon l'une des revendications précédentes, **caractérisé par** une mise de l'appareil de commande manuel (4) dans un deuxième état de fonctionnement lorsque le processus de déconnexion a été exécuté ou mise en œuvre de manière fonctionnelle avec succès, grâce à une signalisation du premier élément d'actionnement d'arrêt d'urgence (8) comme inactif ou grâce à l'affichage de la non-disponibilité du premier élément d'actionnement d'arrêt d'urgence (8), par le blocage d'une sortie ou de l'exécution d'instructions de commande potentiellement critiques en ce qui concerne la sécurité, de façon à ce que, dans ce deuxième état de fonctionnement, des modifications, potentiellement critiques en ce qui concerne la sécurité, d'opérations de machine ne soient pas disponibles ou exécutables pour un opérateur, par une transmission de données relatives au process ou à la machine par l'intermédiaire de l'au moins une interface de données radio (6, 6') et par une visualisation au moins partielle de données relatives au process ou à la machine sur un écran (14) de l'appareil de commande manuel (4) pendant le passage dans le deuxième état de fonctionnement.

11. Procédé selon l'une des revendications précédentes, **caractérisé en ce qu'**un état actif ou d'actionnement initié manuellement du premier élément d'actionnement d'arrêt d'urgence () est représenté par au moins un contact d'ouverture (24, 24') interrompu électriquement dans l'au moins un circuit de commutation de sécurité d'arrêt d'urgence (9, 9') réalisé à l'aide d'un seul circuit, de préférence à l'aide de deux circuits, de la commande de machine (3, 3') sélectionnée ou reliée activement.

12. Procédé selon l'une des revendications précédentes, **caractérisé en ce qu'**un état inactif ou de veille, plus particulièrement un état de commutation inactif du premier élément d'actionnement d'arrêt d'urgence (8), est représenté par au moins un contact d'ouverture (24, 24') fermé électriquement dans l'au moins un circuit de commutation de sécurité d'arrêt d'urgence (9, 9') réalisé à l'aide d'un seul circuit, de préférence à l'aide de deux circuits, de la commande de machine (3, 3') sélectionnée ou reliée activement.

13. Procédé selon l'une des revendications 10 à 12, **caractérisé en ce qu'**un bouton de validation (25), prévu sur l'appareil de commande manuel (4) ou en interaction avec l'appareil de commande manuel (4), actionnable manuellement par un opérateur, est commuté de manière automatisée en mode inactif pour la libération individuelle d'instructions de commande potentiellement dangereuses, lorsque l'appareil de commande manuel (4) se trouve dans le deuxième état de fonctionnement.

14. Procédé selon l'une des revendications précédentes, **caractérisé en ce que**, en tenant compte d'un identifiant unique (ID1-ID3), pouvant être traité électroniquement, de l'appareil de commande manuel (4) et/ou en tenant compte d'un identifiant unique (ID1'-ID3') d'un poste de radio correspondant compatible (15, 15') ou d'un boîtier de raccordement (16), une liaison point à point entre l'appareil de commande manuel (4) et un poste de radio correspondant compatible (15, 15') ou un boîtier de raccordement (16) est établie et **en ce qu'**il est vérifié qu'un appareil de commande manuel (4) est relié de manière fonctionnelle avec un seul poste de radio correspondant compatible (15, 15') ou avec un seul boîtier de raccordement (16) et/ou un poste de radio correspondant compatible (15, 15') ou un boîtier de raccordement (16) est relié de manière fonctionnelle avec un seul appareil de commande manuel (4).

15. Procédé selon l'une des revendications précédentes, **caractérisé en ce qu'**une zone d'action radio locale (22, 22') ou une zone de disponibilité limitée, prédéfinie localement, de l'interface de données radio (6, 6') est prédéfinie, et **en ce que**, lors d'une sortie de la zone d'action radio (22, 22') de l'interface de données radio (6, 6') de l'appareil de commande manuel (4) ou lors d'une sortie et d'un dépassement de la zone de disponibilité prédéfinie de l'appareil de commande manuel (4), un état de fonctionnement sécurisé du système de sécurité de la machine (1) est automatiquement initié, plus particulièrement le circuit de commutation de sécurité d'arrêt d'urgence (9, 9') de la commande de machine sélectionnée ou reliée activement (3, 3') est interrompu électriquement.

16. Procédé selon la revendication 15, **caractérisé en ce que**, avant l'initiation automatique ou semi-automatique d'un état de fonctionnement sécurisé, une approche ou une arrivée dans la zone d'action radio locale (22, 22') ou dans la zone de disponibilité prédéfinie, limitée localement, de l'interface de données radio (6, 6') est signalée par des couleurs variables de manière contrôlée ou des variations de couleurs, plus particulièrement indiquée par une activation ou une désactivation par intermittence d'un rétro-éclairage (31) ou d'un éclairage du premier élément d'actionnement d'arrêt d'urgence (8) et/ou indiquée par des aspects structurels ou physiques, pouvant être discernés visuellement, de l'élément d'actionnement d'arrêt d'urgence (8).

17. Système de commande de machine (1) avec au moins une commande de machine (3, 3') pour l'exécution d'opérations de machine et avec au moins un appareil de commande manuel mobile (4) pouvant être porté par un opérateur, pour le contrôle fonctionnel d'au moins une des commandes de machine (3, 3'),
cet appareil de commande manuel (4) comprenant au moins un élément de commande (12) ou au moins un bouton (13) pour le contrôle d'opérations de machine par un opérateur et
cet appareil de commande manuel (4) comprenant un premier élément d'actionnement d'arrêt d'urgence (8) pour terminer des opérations de machine potentiellement dangereuses,
et cet appareil de commande manuel (4) comprenant au moins une interface de données radio (6, 6'), dans lequel l'au moins une interface de données radio (6, 6') est conçue pour l'établissement et la mise en œuvre d'une liaison fonctionnelle de commande entre l'appareil de commande manuel (4) et une commande de machine (3, 3') sélectionnée par un opérateur et reliée du point de vue de la commande,
et dans lequel les états d'actionnement existants, pouvant être activés et modifiés manuellement par un opérateur, du premier élément d'actionnement d'arrêt d'urgence (8) sont transmis par l'intermédiaire de l'au moins une interface de données radio (6, 6') à l'aide d'un signal et sont entrés dans un circuit de commutation de sécurité d'arrêt d'urgence (9, 9') de la commande de machine (3, 3') sélectionnée ou reliée activement, de façon à ce que, dans un premier état de fonctionnement de l'appareil de commande manuel (4), le premier élément d'actionnement d'arrêt d'urgence (8) puisse être couplé, de manière fonctionnelle, dans le circuit de commutation de sécurité d'arrêt d'urgence (9, 9') de la commande de machine (3, 3') sélectionnée ou reliée activement, **caractérisé en ce que**
au moins un poste de déconnexion (21, 21') prédéfini localement ou au moins une zone de déconnexion prédéfinie localement pour l'appareil de commande manuel (4) et/ou pour le premier élément d'actionnement d'arrêt d'urgence (8) est prévu, au moins un autre élément d'actionnement d'arrêt d'urgence (19, 19') disponible en permanence, à portée de main de l'opérateur, étant mis à disposition au niveau de ce poste de déconnexion (21, 21') ou dans cette zone de déconnexion,
l'au moins un poste de déconnexion (21, 21') prédéfini localement ou l'au moins une zone de déconnexion est positionnée à l'intérieur d'une zone d'action (22, 22'), fonctionnelle ou importante d'un point de vue de la commande, du premier élément d'actionnement d'arrêt d'urgence (8), et **en ce que**, dans cette zone d'action (22, 22'), un arrêt d'une opération de machine potentiellement dangereuse par l'opérateur est possible grâce à l'actionnement du premier ou de l'au moins un autre élément d'actionnement d'arrêt d'urgence (19, 19'),
un système de mesure de position approprié pour l'intérieur avec une précision suffisante de la résolution locale ou de la position est prévu pour la détermination automatisée de la position respective de l'opérateur et conçu de manière correspondante, et **en ce que** le système de commande de machine (1) est conçu pour la vérification automatisée si la position respective de l'opérateur se trouve à l'extérieur d'une zone dangereuse (23, 23') prédéfinie d'opérations de machine pouvant être exécutées ou en cours, et **en ce que**, dans le système de commande de machine (1) une libération, disponibilité, ou une applicabilité automatisée d'un processus de déconnexion de l'appareil de commande manuel (4) ou de l'élément d'actionnement d'arrêt d'urgence (8) est possible à la condition d'un résultat de vérification positif en ce qui concerne la position de l'opérateur et
l'au moins un poste de déconnexion (21, 21') ou l'au moins une zone de déconnexion est conçu de façon à ce qu'un opérateur puisse initier ou exécuter manuellement le processus de déconnexion de l'appareil de commande manuel (4) et/ou du premier élément d'actionnement d'arrêt d'urgence (8), ce processus de déconnexion comprenant au moins une action de commande manuelle grâce à laquelle le premier élément d'actionnement d'arrêt d'urgence (8) peut être découplé hors du circuit de commutation de sécurité d'arrêt d'urgence (9, 9') de la commande de machine sélectionnée ou reliée activement (3, 3') et peut être commuté de façon à être inopérant.

18. Système de commande de machine selon la revendication 17, **caractérisé en ce qu'**il est conçu pour exécuter un procédé selon l'une ou plusieurs des revendications 1 à 16.
